# EUROPEAN PATENT APPLICATION

(11) **EP 4 694 405 A1**
(43) Date of publication of application: **11.02.2026**
(21) Application number: 24784415.2
(22) Date of filing: 03.04.2024
(51) Int. Cl.: H04W 56/00

(54) **COMMUNICATION METHOD AND COMMUNICATION APPARATUS**

(30) Priority: 06.04.2023 CN 202310388424
(71) Applicant: Huawei Technologies Co., Ltd., Shenzhen, Guangdong 518129 (CN)
(72) Inventor: LI, Tie, Shenzhen, Guangdong 518129 (CN); YU, Zheng, Shenzhen, Guangdong 518129 (CN)
(74) Representative: Gill Jennings & Every LLP
(86) International application number: PCT/CN2024/086116
(87) International publication number: WO 2024/208333

(57) **Abstract**

This application provides a communication method and a communication apparatus. The communication method may be applied to a terminal apparatus. The method includes: receiving first information, where the first information indicates a manner of obtaining a timing advance TA of a first cell; and obtaining the TA of the first cell based on the first information. According to the technical solution provided in this application, the obtaining manner of obtaining the TA of the first cell is configured for the terminal apparatus based on the first information. Therefore, before receiving a cell handover command, the terminal apparatus may obtain the TA of the first cell in the manner indicated by the first information, to complete uplink synchronization with the first cell. In this way, after the terminal apparatus is handed over to the first cell, the terminal apparatus may no longer perform the uplink synchronization process. Therefore, a handover delay of handover to the first cell can be reduced.

## Description

This application claims priority to Chinese Patent Application No. 202310388424.9, filed with the China National Intellectual Property Administration on April 6, 2023, and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Generally, when a terminal device is handed over from a source cell to a target cell, the terminal device needs to obtain information corresponding to the target cell for accessing the target cell and performing communication. For example, downlink timing of the target cell, a time offset parameter, a frequency offset parameter, downlink channel state quality, uplink state quality, a downlink beam, an uplink beam, uplink timing, and an uplink timing advance (timing advance, TA). In a conventional cell handover technology, a process of obtaining the foregoing information is performed after the terminal device receives a handover command, resulting in a large handover delay.

Currently, the 3GPP proposes that the terminal device completes obtaining of the foregoing information before receiving the handover command, so that after the terminal device is handed over to the target cell, the terminal device can immediately communicate with the target cell, for example, send and receive data. In this way, a delay of handover to the target cell is reduced, and requirements of low-delay and large-capacity services, like XR and cloud gaming, can be met.

However, currently, only a concept of obtaining the foregoing information before receiving the handover command is proposed, and there is no specific technical solution for implementation. Therefore, how to reduce a handover delay is an urgent technical problem to be resolved.

### SUMMARY

This application provides a communication method and a communication apparatus, to reduce a handover delay.

According to a first aspect, this application provides a communication method, applied to a terminal apparatus, and including: receiving first information, where the first information indicates a manner of obtaining a timing advance TA of a first cell; and obtaining the TA of the first cell based on the first information.

A specific form of the first cell is not limited in this embodiment. The TA of the first cell is also referred to as a first TA.

For example, in a first scenario, the first cell in this embodiment is a candidate cell. It should be noted that the candidate cell in this embodiment refers to any cell other than a primary serving cell, and is also referred to as a neighboring cell, a candidate neighboring cell, a target cell, or a candidate target cell.

It should be understood that the candidate cell may be a secondary serving cell, a non-serving cell (the non-serving cell is a cell other than the primary serving cell and the secondary serving cell), a cell whose physical cell identifier (physical cell identifier, PCI) is different from that of a service area (the service area is the primary serving cell and/or the secondary serving cell), a cell whose PCI associated with a reference signal is different from that of the service area, a cell whose PCI associated with a reference signal is different from that of a primary serving cell, a cell whose PCI associated with a reference signal is different from that of the secondary serving cell, or the like.

The candidate cell may be at least one cell in a cell set configured for handover.

The candidate cell may be at least one cell in a cell set with an LTM configuration.

The candidate cell may be at least one cell configured for downlink beam measurement association.

The candidate cell may be at least one cell configured to obtain a TA association.

The candidate cell may be at least one cell configured to obtain channel state information association.

The candidate cell may be at least one cell configured to obtain time offset or frequency offset information association.

The candidate cell may be at least one cell indicated by a physical downlink control channel (physical downlink control channel, PDCCH) order.

The candidate cell may be at least one cell indicated by at least one of the following: RRC, medium access control-control element (medium access control-control element, MAC-CE) signaling, and downlink control information (downlink control information, DCI) signaling.

The candidate cell may be a transmission reception point (transmission reception point, TRP).

The candidate cell may be a TRP whose PCI is different from that of the service area.

In other words, in the first scenario, a network device in this embodiment sends the first information to the terminal device, where the first information indicates a manner of obtaining a TA of a first candidate cell other than the serving cell. The serving cell is a cell in which the first information is sent or a cell in which the first information is used.

Optionally, the first information in this embodiment is delivered to the terminal device via the primary serving cell. A candidate cell of the primary serving cell may be configured in the first information, and/or a candidate cell of each secondary serving cell is configured.

Optionally, the first information in this embodiment is delivered to the terminal device via the primary serving cell. The first information may include a candidate cell set of the primary serving cell and/or a candidate cell set of the secondary serving cell. A cell included in each candidate cell set is a candidate cell. For the terminal device, TAs of different cells are different.

A TA, namely, a timing advance, is a maximum timing advance (TA), and refers to a difference between an actual time at which a mobile station signal arrives at a base station and a time at which the mobile station signal arrives at the base station when a distance between the mobile station and the base station is 0. The timing advance (TA) is a command sent by the base station (Base Station, BS) to UE for adjusting uplink transmission. The UE sends UL symbols in advance according to the command, that is, PUSCH, PUCCH, and SRS transmission. The timing advance command TAC (Timing Advance Command) notifies the UE of an amount of time to initiate UL transmission in advance. The TA may be a TA command, a TA value, or a TA indication. This is not specifically limited in this application.

For another example, in a second scenario, the first cell in this embodiment is a primary serving cell.

In other words, in the second scenario, the network device in this embodiment sends the first information to the terminal device, where the first information indicates a manner of obtaining a TA of the primary serving cell.

During specific implementation, a manner of obtaining the timing advance TA of the first cell may be understood as a manner in which the terminal device receives a TA indication of the first cell, and the TA indication includes the TA. The TA indication is, for example, a TAC. The TA indication manner includes any one or more of the following, or one or more are selected from the following sets (the plurality of sets may be configured by using at least one of RRC/MAC-CE/DCI):
(1) The TA of the first cell is received through an RAR, that is, the TA is carried in the RAR.
(2) The TA of the first cell is received through a cell handover command, that is, the TA is carried in the RAR.
(3) The TA of the first cell is received through independent signaling (also referred to as third information in this application). For example, the third information includes at least one of the following: RRC, medium access control-control element (medium access control-control element, MAC-CE) signaling, and downlink control information (downlink control information, DCI) signaling.

In this embodiment, after receiving the first information, the terminal device obtains the TA of the first cell based on the first information. Specifically, the terminal device receives the TA of the first cell in a receiving manner indicated by the first information.

Optionally, in this embodiment, when the first information indicates that there is no RAR, the TA is carried in the cell handover command. When it is indicated that there is an RAR, the TA is carried in the RAR. Alternatively, when there is an RAR, the TA may be carried in another command.

It can be learned that, according to the communication method provided in this embodiment, when the first cell is a candidate cell, the obtaining manner of obtaining the TA of the first cell is configured for the terminal device based on the first information. Therefore, before receiving the cell handover command, the terminal device may obtain the TA of the first cell in a manner indicated by the first information, to complete uplink synchronization with the first cell. In this way, after being handed over to the first cell, the terminal device may directly perform uplink sending based on the obtained TA. Compared with obtaining the TA after the handover, this method can reduce a handover delay of handover to the first cell.

For example, in an implementation solution, the terminal receives the first message.

Optionally, the terminal receives DCI for triggering random access. Optionally, the terminal does not receive information, but directly sends random access. The terminal sends an uplink signal to the first cell, where the signal may be a preamble or an SRS. Correspondingly, the first cell or the network device receives the uplink reference signal sent by the terminal.

Optionally, the network device, the first cell, or the serving cell determines a TA value of the first cell. The network device, the first cell, or the serving cell sends the TA of the first cell. Optionally, after determining the TA of the first cell based on the uplink reference signal sent by the terminal device, the first cell may further send the TA of the first cell to the terminal device via a network device to which a serving cell currently serving the terminal device belongs. The terminal device obtains the TA of the first cell based on the receiving manner indicated by the first information.

The TA of the first cell may be timing advance information from the first cell to the terminal.

With reference to the first aspect, in a possible implementation, the method further includes: receiving second information, where the second information indicates a TA obtaining manner of the first cell set. The first cell is included in the first cell set. The obtaining the TA of the first cell based on the first information includes: obtaining the TA of the first cell based on the first information and the second information.

It may be understood that, in the communication method provided in this embodiment, the network device sends the first information and the second information to the terminal device, so that the terminal device determines a receiving manner of receiving the TA indication of the first cell. It may be understood that, in this implementation, flexible scheduling may be performed on a terminal device that supports a random access response (random access response, RAR), a terminal device that does not support the RAR, and a terminal device that supports both the RAR and no RAR (support both obtaining the TA indication through the RAR and obtaining the TA indication in another manner). The terminal device may report whether the terminal device supports a capability of obtaining the TA through the RAR (or receiving the RAR). In a capability reporting manner, by default, that the terminal device supports obtaining the TA through the RAR (or receiving the RAR) is a mandatory capability and does not need to be reported, but the reporting capability does not support obtaining the TA through the RAR (or receiving the RAR). In this case, the UE may support obtaining the TA through the RAR (or receiving the RAR). In another capability reporting manner, by default, that the terminal device does not support obtaining the TA through the RAR (or receiving the RAR) is a mandatory capability and does not need to be reported, but the reporting capability supports obtaining the TA through the RAR (or receiving the RAR). In this case, the UE may support obtaining the TA through the RAR (or receiving the RAR). In still another capability reporting manner, the terminal device reports at least one or more of the following capabilities or capability sets: supporting obtaining the TA (or receiving the RAR) through the RAR, supporting obtaining the TA (or receiving an RAR) without the RAR, and supporting both obtaining the TA (or receiving the RAR) through the RAR and obtaining the TA (or receiving the RAR) without the RAR. The network device, the serving cell, or the first cell may determine the first message and/or the second message based on a capability reported by the terminal.

With reference to the first aspect, in a possible implementation, the first cell is a candidate cell.

With reference to the first aspect, in a possible implementation, the manner, indicated by the first information, of obtaining the TA of the first cell is at least one or more of the following: receiving the TA of the first cell from the RAR, or receiving the TA of the first cell from the cell handover command, or receiving the TA of the first cell from the third information, where the third information includes at least one of the following: radio resource control RRC signaling, medium access control-control element MAC-CE signaling, and downlink control information DCI signaling.

It should be noted herein that, in this application, receiving the TA of the first cell from the RAR is also referred to as receiving the TA indication of the first cell from the random access response RAR, receiving the TA of the first cell from the cell handover command is also referred to as receiving the TA indication of the first cell from the cell handover command, and receiving the TA of the first cell from the third information is also referred to as receiving the TA indication of the first cell from the third information.

How the first information specifically indicates is not limited in this embodiment.

For example, in an implementation solution, the first information may directly indicate that the terminal device receives the TA of the first cell through the RAR, or receives the TA of the first cell through the cell handover command, or receives the TA indication of the first cell through other signaling. It may be understood that this manner may also be considered as an explicit indication.

For another example, in another implementation solution, the first information may implicitly indicate the manner of obtaining the TA of the first cell based on whether the RAR of the first cell is configured. If the RAR of the first cell is configured (which is also referred to as indicating that the RAR of the first cell is enabled), it is considered that the terminal can receive the TA of the first cell through the RAR. Correspondingly, when the terminal device receives the first information, if the first information indicates, to the terminal device, that the RAR of the first cell is configured, the terminal device receives the TA of the first cell through the RAR. Optionally, the terminal device may alternatively receive the TA of the first cell through the cell handover command or another command. Otherwise (to be specific, the RAR of the first cell is not configured, which is also referred to as indicating that the RAR of the first cell is disabled), it is considered that the terminal device may receive the TA of the first cell in another manner. Correspondingly, when the terminal device receives the first information, if the first information indicates, to the terminal device, that the RAR of the first cell is not configured, the terminal device receives the TA of the first cell in another manner, for example, receives the TA of the first cell through the handover command or receives the TA of the first cell through separate signaling.

For another example, in still another implementation solution, the first information may indicate, to the terminal device, whether the RAR of the first cell is configured. Then, if the RAR of the first cell is configured, the first information may further indicate, to the terminal device, that the TA is received through the RAR, or the TA indication is received through the handover command, or the TA indication is received through independent signaling, or the TA indication is received in a joint receiving manner.

With reference to the first aspect, in a possible implementation, the TA of the first cell is obtained, and the method further includes: sending the uplink reference signal to the first cell through a first beam. The uplink reference signal is used by the base station device, the first cell, or the serving cell to determine the TA of the first cell. The first beam is any one or at least one of the following: an SSB beam associated with an RO, a beam used for receiving an SSB associated with an RO indicated by DCI used to trigger sending of the uplink reference signal or a beam used for receiving a CSI-RS, a beam indicated by the DCI used to trigger sending of the uplink reference signal, a beam indicated by one of transmission configuration indicators TCI associated with the first cell, a beam indicated by one of active transmission configuration indicators TCI associated with the first cell, a beam indicated by one of transmission configuration indicators TCI associated with the active first cell, a beam indicated by one of active transmission configuration indicators TCI associated with the active first cell, a beam used by the DCI used to trigger sending of the uplink reference signal, a beam indicated by the PDCCH order, a beam used by the PDCCH order, a beam configured by default through RRC, a beam indicated by a MAC-CE, a beam indicated by DCI, and a beam of the serving cell.

It should be noted herein that all random access in this application is used to determine the TA of the first cell.

All ROs in this application are associated with random access.

With reference to the first aspect, in still another possible implementation, the TA of the first cell is obtained, and the method further includes: sending the uplink reference signal to the first cell through a first TCI. The uplink reference signal is used by the base station device, the first cell, or the serving cell to determine the TA of the first cell. The first TCI is any one or at least one of the following: an SSB associated with the RO, a TCI used for receiving the SSB associated with the RO indicated by the DCI used to trigger sending of the uplink reference signal or a TCI used for receiving the CSI-RS, a TCI indicated by the DCI used to trigger sending of the uplink reference signal, a TCI in transmission configuration indicators TCI associated with the first cell, a TCI in active transmission configuration indicators TCI associated with the first cell, a TCI in transmission configuration indicators TCI associated with the active first cell, a TCI in active transmission configuration indicators TCI associated with the active first cell, a TCI used by the DCI used to trigger sending of the uplink reference signal, a TCI indicated by the PDCCH order, a TCI used by the PDCCH order, a TCI configured by default through the RRC, a TCI indicated by the MAC-CE, a TCI indicated by the DCI, and a TCI of the serving cell.

In the foregoing content, if there is only one active transmission configuration indicator TCI of the first cell, the TCI is selected. If there is more than one active transmission configuration indicator TCI of the first cell, a 1^{st} TCI, a last TCI, or any TCI may be selected. If the first cell has no active transmission configuration indicator TCI, a configured TCI is selected. If the first cell is not activated, the SSB associated with the RO, the TCI used for receiving the SSB associated with the RO indicated by the DCI used to trigger sending of the uplink reference signal, or the TCI used for receiving the CSI-RS may be selected. If the DCI used to trigger sending of the uplink reference signal does not indicate the uplink reference signal or a TCI for receiving the TA, the default TCI is used. The default TCI is any one or more of the foregoing descriptions.

In the foregoing content, the DCI used to trigger sending of the uplink reference signal may be a PDCCH order for triggering random access. The uplink reference signal may be a preamble and/or an SRS.

In the foregoing content, the TCI may be a downlink TCI, a spatial relation, or a unified TCI (a joint TCI, a separate uplink TCI, or a separate downlink TCI).

In the foregoing content, if there is only one active transmission configuration indicator TCI of the first cell, the TCI is selected. If there is more than one active transmission configuration indicator TCI of the first cell, the 1^{st} TCI, the last TCI, or any TCI may be selected.

With reference to the first aspect, in still another possible implementation, the TA of the first cell is obtained, and the method further includes: receiving the TA of the first cell through the first beam (which may be received through the RAR, the cell handover command, or another channel). The first beam is any one or at least one of the following: the SSB beam associated with the RO, the beam used for receiving the SSB associated with the RO indicated by the DCI used to trigger sending of the uplink reference signal or the beam used for receiving the CSI-RS, the beam indicated by the DCI used to trigger sending of the uplink reference signal, the beam indicated by one of transmission configuration indicators TCI associated with the first cell, the beam indicated by one of active transmission configuration indicators TCI associated with the first cell, a beam indicated by one of transmission configuration indicators TCI associated with the active first cell, the beam indicated by one of active transmission configuration indicators TCI associated with the active first cell, the beam used by the DCI used to trigger sending of the uplink reference signal, the beam indicated by the PDCCH order, the beam used by the PDCCH order, the beam configured by default through RRC, the beam indicated by the MAC-CE, the beam indicated by the DCI, a beam used by the uplink reference signal for determining the TA, and the beam of the serving cell.

With reference to the first aspect, in still another possible implementation, the TA of the first cell is obtained, and the method further includes: receiving the TA of the first cell through the first beam (which may be received through the RAR, the cell handover command, or another channel). The uplink reference signal is used by the base station device, the first cell, or the serving cell to determine the TA of the first cell. The first TCI is any one or at least one of the following: the SSB associated with the RO, the TCI used for receiving the SSB associated with the RO indicated by the DCI used to trigger sending of the uplink reference signal or the TCI used for receiving the CSI-RS, the TCI indicated by the DCI used to trigger sending of the uplink reference signal, the TCI in transmission configuration indicators TCI associated with the first cell, the TCI in active transmission configuration indicators TCI associated with the first cell, the TCI in transmission configuration indicators TCI associated with the active first cell, the TCI in active transmission configuration indicators TCI associated with the active first cell, the TCI used by the DCI used to trigger sending of the uplink reference signal, the TCI indicated by the PDCCH order, the TCI used by the PDCCH order, the TCI configured by default through the RRC, the TCI indicated by the MAC-CE, the TCI indicated by the DCI, a TCI used by the uplink reference signal for determining the TA, and the TCI of the serving cell.

In the foregoing content, if there is only one active transmission configuration indicator TCI of the first cell, the TCI is selected. If there is more than one active transmission configuration indicator TCI of the first cell, the 1^{st} TCI, the last TCI, or any TCI may be selected. If the first cell has no active transmission configuration indicator TCI, the configured TCI is selected. If the first cell is not activated, the SSB associated with the RO, the TCI used for receiving the SSB associated with the RO indicated by the DCI used to trigger sending of the uplink reference signal, or the TCI used for receiving the CSI-RS may be selected. If the DCI used to trigger sending of the uplink reference signal does not indicate the uplink reference signal or a TCI for receiving the TA, the default TCI is used. The default TCI is any one or more of the foregoing descriptions.

In the foregoing content, the DCI used to trigger sending of the uplink reference signal may be a PDCCH order for triggering random access. The uplink reference signal may be a preamble and/or an SRS. For example, an SSB reference signal indicated by the PDCCH order.

In the foregoing content, the TCI may be a downlink TCI, a spatial relation, or a unified TCI (a joint TCI, a separate uplink TCI, or a separate downlink TCI).

With reference to the first aspect, in a possible implementation, the method further includes: determining transmit power of the uplink reference signal based on a path loss reference signal PL-RS, where the PL-RS may be any one of the following: the SSB associated with the RO, an SSB or a CSI-RS associated with an RO indicated by the DCI used to trigger sending of the uplink reference signal, a reference signal indicated by the DCI used to trigger sending of the uplink reference signal, a reference signal (for example, an RS indicated by a type A, a type B, a type C, or a type D QCL) associated with one of transmission configuration indicators TCI associated with the first cell, a reference signal (for example, an RS indicated by a type A, a type B, a type C, or a type D QCL) associated with one of active transmission configuration indicators TCI associated with the first cell, a reference signal (for example, an RS indicated by a type A, a type B, a type C, or a type D QCL) associated with one of transmission configuration indicators TCI associated with the active first cell, a reference signal (for example, an RS indicated by a type A, a type B, a type C, or a type D QCL) associated with one of active transmission configuration indicators TCI associated with the active first cell, a reference signal (for example, an RS indicated by a type A, a type B, a type C, or a type D QCL) associated with a TCI used by the DCI used to trigger sending of the uplink reference signal, a reference signal indicated by the PDCCH order (an SSB reference signal indicated by the PDCCH order), an associated reference signal (for example, an RS indicated by a type A, a type B, a type C, or a type D QCL) used by the PDCCH order, a path loss reference signal configured by default through the RRC, a path loss reference signal indicated by the MAC-CE, a path loss reference signal indicated by the DCI, and a path loss reference signal of the serving cell.

In this embodiment, when the terminal device determines the transmit power of the preamble, the selected reference signal is the SSB associated with the RO, a reference signal indicated by or associated with the active transmission configuration indicator TCI of the first cell, a reference signal associated with a PDCCH, or a path loss reference signal indicated by the PDCCH order.

With reference to the first aspect, in a possible implementation, when the TA indication of the first cell is received through the RAR, a cell handover command, or other signaling, the TA indication includes at least one of the following content: a first identifier, a TA value, and a second identifier. The first identifier indicates whether the TA value carried in the RAR is an absolute value (for example, 1 bit, where 0 indicates a relative value, and 1 indicates an absolute value; or vice versa). The first identifier may alternatively indicate whether absolute update is performed, and the second identifier indicates the first cell or the first cell set.

For example, the second identifier is any one of the following types: a lower-layer triggered mobility LTM configuration index corresponding to the first cell, a cell identifier of the first candidate cell, or a timing advance group TAG identifier corresponding to the first candidate cell.

With reference to the first aspect, in a possible implementation, the manner, indicated by the first information, of obtaining the TA of the first cell further includes: sending a preamble to the first cell, or sending an uplink reference signal to the first cell, and obtaining the TA through a downlink timing difference.

With reference to the first aspect, in a possible implementation, after the TA of the first cell is obtained, the method further includes: starting or restarting a timer. If the cell handover command is not received before the timer expires, the first TA is released after the timer expires, or the first TA is released after the cell handover command is received.

That the timer expires may be understood as that preset duration is exceeded. Releasing the first TA may be understood as releasing all resources of the first cell. Releasing the first TA may further include no longer maintaining the first TA.

For example, after obtaining the TA of the first cell, the terminal device starts or restarts the timer to start timing. If it is assumed that the preset duration is 50 ms, if the terminal device does not receive the cell handover command within 50 ms, the terminal device releases the first TA; or after the timer expires, the first TA is released after the cell handover command is received.

With reference to the first aspect, in a possible implementation, after the TA of a first cell is obtained, the method further includes: starting or restarting a timer. If the cell handover command is received before the timer expires, but the serving cell after the handover does not include the first cell, and/or the second candidate cell set of the terminal device after the handover does not include the first cell, the first TA is released. If the cell handover command is received before the timer expires, but the serving cell after the handover includes the first cell, or the second candidate cell set of the terminal device after the handover includes the first cell, the first TA continues to be maintained.

With reference to the first aspect, in a possible implementation, the method further includes: sending fourth information, where the fourth information indicates an RAR support capability of the terminal device.

According to a second aspect, this application provides a communication method, including: sending first information to a terminal apparatus, where the first information indicates a manner of obtaining a timing advance TA of a first cell.

With reference to the second aspect, in a possible implementation, the method further includes: sending second information to the terminal apparatus, where the second information indicates a manner of obtaining a TA of a first cell set, and the first cell is included in the first cell set.

With reference to the second aspect, in a possible implementation, the first cell is a candidate cell.

With reference to the second aspect, in a possible implementation, the manner, indicated by the first information, of obtaining the TA of the first cell is any one of the following manners: receiving a TA indication of the first cell from a random access response RAR; or
receiving a TA indication of the first cell from a cell handover command, where the TA indication includes the TA of the first cell; or receiving a TA indication of the first cell from third information, where the third information includes at least one of the following: medium access control-control element MAC-CE signaling and downlink control information DCI signaling.

With reference to the second aspect, in a possible implementation, when the manner, indicated by the first information, of obtaining the TA of the first cell is receiving the TA indication of the first cell through the RAR, the TA indication includes at least one of the following content: a first identifier, a TA value, and a second identifier. The first identifier indicates whether the TA value carried in the RAR is an absolute value, and the second identifier indicates the first cell or the first cell set.

With reference to the second aspect, in a possible implementation, the second identifier is any one of the following types: a lower-layer triggered mobility LTM configuration index corresponding to the first cell, a cell identifier of the first cell, or a timing advance group TAG identifier corresponding to the first cell.

With reference to the second aspect, in a possible implementation, the manner, indicated by the first information, of obtaining the TA of the first cell further includes: sending a preamble to the first cell, or sending an uplink reference signal to the first cell, or obtaining the TA through a downlink timing difference.

With reference to the second aspect, in a possible implementation, the method further includes: receiving fourth information sent by the terminal apparatus, where the fourth information indicates an RAR support capability of the terminal device; and determining the first information and/or the second information based on the fourth information.

According to a third aspect, this application provides a communication apparatus, applied to a terminal apparatus, and including: a transceiver module, configured to receive first information, where the first information indicates a manner of obtaining a timing advance TA of a first cell; and a processing module, configured to obtain the TA of the first cell based on the first information.

With reference to the third aspect, in a possible implementation, the transceiver module is further configured to receive second information, where the second information indicates a manner of obtaining a TA of a first cell set, and the first cell is included in the first cell set.

That the processing module is further configured to obtain the TA of the first cell based on the first information includes: obtaining the TA of the first cell based on the first information and the second information.

With reference to the third aspect, in a possible implementation, the first cell is a candidate cell.

With reference to the third aspect, in a possible implementation, the manner, indicated by the first information, of obtaining the TA of the first cell is any one of the following manners: receiving a TA indication of the first cell from a random access response RAR, or receiving a TA indication of the first cell from a cell handover command, where the TA indication includes the TA of the first cell, or receiving a TA indication of the first cell from third information, where the third information includes at least one of the following: medium access control-control element MAC-CE signaling and downlink control information DCI signaling.

With reference to the third aspect, in a possible implementation, the transceiver module is further configured to send a preamble to the first cell through a first beam, where the preamble is used by the first cell to determine a TA value of the first cell, and the first beam is any one of the following: an SSB beam associated with an RO, a beam indicated by one of active transmission configuration indicators TCI of the first cell, a beam used by a downlink control channel PDCCH order, and a beam indicated by the PDDCH order.

With reference to the third aspect, in a possible implementation, the processing module is further configured to determine transmit power of the preamble based on a path loss reference signal PL-RS, where the PL-RS is any one of the following: an SSB associated with the RO, a reference signal indicated by or associated with the active transmission configuration indicator TCI of the first cell, a reference signal associated with a PDCCH, and a path loss reference signal indicated by the PDCCH order.

With reference to the third aspect, in a possible implementation, when the TA indication of the first cell is received through the RAR, the TA indication includes at least one of the following content: a first identifier, a TA value, and a second identifier. The TA indication includes at least one of the following content: the first identifier, the TA value, and the second identifier. The first identifier indicates whether the TA value carried in the RAR is an absolute value, and the second identifier indicates the first cell or the first cell set.

With reference to the third aspect, in a possible implementation, the second identifier is any one of the following types: a lower-layer triggered mobility LTM configuration index corresponding to the first cell, a cell identifier of the first cell, or a timing advance group TAG identifier corresponding to the first cell.

With reference to the third aspect, in a possible implementation, the manner, indicated by the first information, of obtaining the TA of the first cell further includes: sending the preamble to the first cell, or sending an uplink reference signal to the first cell, or obtaining the TA through a downlink timing difference.

With reference to the third aspect, in a possible implementation, after obtaining the TA of the first cell, the processing module is further configured to start or restart a timer. If the cell handover command is not received before the timer expires, the first TA is released after the timer expires, or the first TA is released after the cell handover command is received.

With reference to the third aspect, in a possible implementation, after obtaining the TA of the first cell, the processing module is further configured to start or restart a timer. If the cell handover command is received before the timer expires, but a serving cell after the handover or a second candidate cell set of the terminal device after the handover does not include the first cell, the first TA is released.

With reference to the third aspect, in a possible implementation, the transceiver module is further configured to send fourth information, where the fourth information indicates an RAR support capability of the terminal device.

According to a fourth aspect, this application provides a communication apparatus, including a transceiver module, configured to send first information to a terminal apparatus, where the first information indicates a manner of obtaining a timing advance TA of a first cell.

With reference to the fourth aspect, in a possible implementation, the transceiver module is further configured to send second information to the terminal apparatus, where the second information indicates a manner of obtaining a TA of a first cell set, and the first cell is included in the first cell set.

With reference to the fourth aspect, in a possible implementation, the first cell is a candidate cell.

With reference to the fourth aspect, in a possible implementation, the manner, indicated by the first information, of obtaining the TA of the first cell is any one of the following manners: receiving a TA indication of the first cell from a random access response RAR; or
receiving a TA indication of the first cell from a cell handover command, where the TA indication includes the TA of the first cell; or receiving a TA indication of the first cell from third information, where the third information includes at least one of the following: medium access control-control element MAC-CE signaling and downlink control information DCI signaling.

With reference to the fourth aspect, in a possible implementation, when the manner, indicated by the first information, of obtaining the TA of the first cell is receiving the TA indication of the first cell through the RAR, the TA indication includes at least one of the following content: a first identifier, a TA value, and a second identifier. The first identifier indicates whether the TA value carried in the RAR is an absolute value, and the second identifier indicates the first cell or the first cell set.

With reference to the fourth aspect, in a possible implementation, the second identifier is any one of the following types: a lower-layer triggered mobility LTM configuration index corresponding to the first cell, a cell identifier of the first cell, or a timing advance group TAG identifier corresponding to the first cell.

With reference to the fourth aspect, in a possible implementation, the manner, indicated by the first information, of obtaining the TA of the first cell further includes: sending a preamble to the first cell, or sending an uplink reference signal to the first cell, or obtaining the TA through a downlink timing difference.

According to still another aspect, the terminal obtains downlink timing, a downlink time offset, a downlink frequency offset, a downlink beam, or channel state quality of the first cell. The method includes: The terminal receives tenth information, where the tenth information is used to configure a reference signal resource of the first cell and/or a measurement configuration of the first cell, and/or a first cell reporting configuration. A direction of a beam used for receiving the reference signal resource of the first cell or a used TCI is consistent with a direction of a beam used for sending the preamble or receiving the TA when obtaining the TA of the first cell. A direction of a beam used for reporting a measurement result of the first cell or a TCI is consistent with a direction of the beam used for sending the preamble or receiving the TA when obtaining the TA of the first cell.

With reference to the fourth aspect, in a possible implementation, the transceiver module is further configured to receive fourth information sent by the terminal apparatus, where the fourth information indicates a RAR support capability of the terminal device. The apparatus further includes a processing module, configured to determine the first information and/or the second information based on the fourth information.

According to a fifth aspect, this application provides a communication system. The communication system includes the communication apparatuses according to the third aspect and the fourth aspect.

According to a sixth aspect, this application provides a communication apparatus, including a memory and a processor. The memory is configured to store program instructions. The processor is configured to invoke the program instructions in the memory to perform the method according to any one of the first aspect, the second aspect, or the possible implementations of the first aspect or the second aspect.

According to a seventh aspect, this application provides a computer-readable medium. The computer-readable medium stores program code to be executed by a computer, and the program code includes instructions used to perform the method according to any one of the first aspect, the second aspect, or the possible implementations of the first aspect or the second aspect.

According to an eighth aspect, this application provides a computer program product. The computer program product includes computer program code. When the computer program code is run on a computer, the computer is enabled to implement the method according to any one of the first aspect, the second aspect, or the possible implementations of the first aspect or the second aspect.

According to a ninth aspect, this application further provides a communication method, applied to a terminal apparatus, including: sending a preamble to a first cell, where the preamble is used by the first cell to determine a timing advance TA of the first cell; and receiving a cell handover command, where the cell handover command indicates the terminal apparatus to hand over to the first cell, the cell handover command includes a TA indication of the first cell, and the TA indication includes the TA of the first cell.

According to the communication method provided in this embodiment, the terminal device may learn of the TA of the first cell when receiving the cell handover command. In this way, after being handed over to the first cell, the terminal device may no longer perform an uplink synchronization process. Therefore, a handover delay of handover to the first cell can be reduced.

With reference to the ninth aspect, in a possible implementation, the first cell is a candidate cell.

With reference to the ninth aspect, in a possible implementation, the sending the preamble to the first cell includes: sending the preamble to the first cell through a first beam, where the first beam is any one of the following: an SSB beam associated with a random access occasion RO, a beam indicated by one of active transmission configuration indicators TCI of the first cell, a beam used by a downlink control channel PDCCH order, and a beam of a reference signal indicated by the PDDCH order.

With reference to the ninth aspect, in a possible implementation, the method further includes: determining transmit power of the preamble based on a path loss reference signal PL-RS, where the PL-RS is any one of the following: a synchronization signal block SSB associated with the RO, a reference signal indicated by or associated with the active transmission configuration indicator TCI of the first cell, a reference signal associated with a PDCCH, and a reference signal indicated by the PDCCH order.

With reference to the ninth aspect, in a possible implementation, after the receiving the TA indication of the first cell from the cell handover command, the method further includes: starting or restarting a timer.

With reference to the ninth aspect, in a possible implementation, the method further includes: if the cell handover command is not received before the timer expires, releasing the TA of the first cell after the timer expires, or releasing the TA of the first cell after the cell handover command is received; or if the cell handover command is received before the timer expires, but the serving cell after the handover or a second candidate cell set of the terminal apparatus after the handover does not include the first cell, releasing the TA of the first cell.

With reference to the ninth aspect, in a possible implementation, the method further includes: sending fourth information, where the fourth information indicates a random access response RAR support capability of the terminal apparatus.

According to a tenth aspect, this application provides a communication method, including: receiving a preamble sent by a terminal apparatus to a first cell, where the first cell is a candidate cell of the terminal apparatus; and determining a TA of the first cell based on the preamble.

According to an eleventh aspect, this application provides a communication method, including: sending a cell handover command, where the cell handover command indicates a terminal apparatus to hand over to a first cell, the cell handover command includes a TA indication of the first cell, the TA indication includes a TA of the first cell, and the first cell is a candidate cell of the terminal apparatus.

According to a twelfth aspect, this application provides a communication apparatus. The apparatus includes a module configured to perform the method according to the ninth aspect or any one of the possible implementations of the ninth aspect, or includes a module configured to perform the method according to the tenth aspect or any one of the possible implementations of the tenth aspect, or includes a module configured to perform the method according to the eleventh aspect or any one of the possible implementations of the eleventh aspect.

For technical effect brought by any implementation of the second aspect to the eighth aspect, refer to technical effect brought by the first aspect and any one of the possible implementation methods of the first aspect. Details are not described again.

### BRIEF DESCRIPTION OF DRAWINGS

FIG. 1 is a diagram of a communication system according to this application;
FIG. 2 is a diagram in which a connection between a terminal device and a macro base station is a multi-hop single connection according to this application;
FIG. 3 is a diagram in which a connection between a terminal device and a macro base station is dual connectivity according to this application;
FIG. 4 is a diagram in which a connection between a terminal device and a macro base station is a multi-hop multi-connection according to this application;
FIG. 5 is a diagram of an RAR message indicating a TA according to this application;
FIG. 6 is another diagram of indicating a TA according to this application;
FIG. 7 is a diagram of a process of obtaining a TA based on PDCCH order triggering according to this application;
FIG. 8 is a diagram of cell handover processes respectively proposed in Rel-17 and Rel-18;
FIG. 9 is a diagram of candidate cells according to an embodiment of this application;
FIG. 10 is a schematic flowchart of a communication method according to an embodiment of this application;
FIG. 11 is a schematic flowchart of a communication method according to another embodiment of this application;
FIG. 12 is a diagram of RAR configuration according to this application;
FIG. 13 is a diagram of beam and RL-RS selection according to an embodiment of this application;
FIG. 14 is a diagram of TA maintenance according to an embodiment of this application;
FIG. 15 is a diagram of a communication apparatus according to an embodiment of this application; and
FIG. 16 is a diagram of a communication apparatus according to another embodiment of this application.

### DESCRIPTION OF EMBODIMENTS

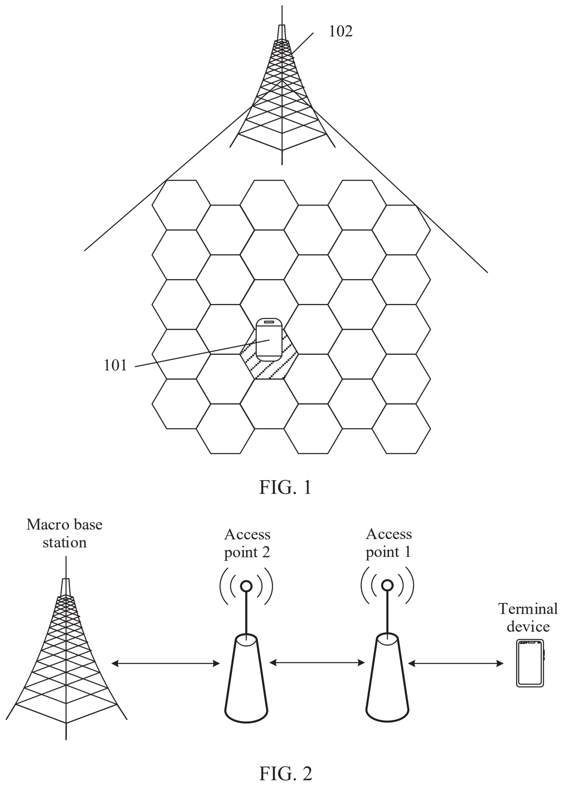

With reference to FIG. 1, a diagram of a structure of a communication system applicable to embodiments of this application is described. As shown in FIG. 1, the communication system includes a terminal device 101 and a network device 102. The terminal device 101 is located in a cell covered by the network device 102, and the terminal device 101 may communicate with the network device 102.

The terminal device 101 may be a device that provides a user with voice and/or data connectivity, for example, a handheld device or a vehicle-mounted device with a wireless connection function. The terminal device may also be referred to as user equipment (user equipment, UE), an access terminal (access terminal), a user unit (user unit), a user station (user station), a mobile station (mobile station), a mobile (mobile), a remote station (remote station), a remote terminal (remote terminal), mobile equipment (mobile equipment), a user terminal (user terminal), wireless telecom equipment (wireless telecom equipment), a user agent (user agent), user equipment (user equipment), or a user apparatus. The terminal device may be a station (station, STA) in a wireless local area network (wireless local area network, WLAN), or may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a vehicle-mounted device, a wearable device, a terminal in a next-generation communication system (for example, a fifth-generation (fifth-generation, 5G) communication network), or a terminal device in a future evolved public land mobile network (public land mobile network, PLMN) network, or the like. 5G may also be referred to as new radio (new radio, NR). In a possible application scenario of this application, the terminal device may alternatively be a terminal device that often operates on land, for example, a vehicle-mounted device. In this application, for ease of description, a chip deployed in the foregoing device, or a chip may also be referred to as a terminal device.

In embodiments of this application, terms UE and terminal device may be interchanged, and terms base station and access network device may also be interchanged.

The network device 102 may be any device with a wireless transceiver function. The device includes but is not limited to an evolved NodeB (evolved NodeB, eNB or eNodeB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), and the like. Alternatively, the device may be a gNB or a transmission point (TRP or TP) in 5G like an NR system, or one or a group (including a plurality of antenna panels) of antenna panels of a base station in a 5G system or a future 6G system, or may be a network node, for example, a baseband unit (BBU) or a distributed unit (distributed unit, DU), that constitutes a gNB or a transmission point.

In some deployments, the gNB may include a central unit (central unit, CU) and a DU. The gNB may further include a radio frequency unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at a physical layer, or is converted from information at a physical layer. Therefore, in this architecture, higher layer signaling, for example, RRC layer signaling, may also be considered to be sent by the DU or sent by the DU and the CU. It may be understood that the network device may be a CU node, a DU node, or a device including a CU node and a DU node. In addition, the CU may be classified into a network device in an access network (radio access network, RAN), or the CU may be classified into a network device in a core network (core network, CN). This is not limited in this application.

In this application, the network device and the terminal device may communicate with each other through a licensed spectrum, or may communicate with each other through an unlicensed spectrum, or may communicate with each other through both a licensed spectrum and an unlicensed spectrum. The network device and the terminal device may communicate with each other through a spectrum below 6 gigahertz (gigahertz, GHZ), or may communicate with each other through a spectrum above 6 GHz, or may communicate with each other through both a spectrum below 6 GHz and a spectrum above 6 GHz. A spectrum resource used between the network device and the terminal device is not limited in embodiments of this application.

It may be understood that a quantity of terminal devices shown in FIG. 1 is merely an example. In an actual process, there may be another quantity of terminal devices. It should be noted herein that specific forms of the network device and the terminal device are not limited in embodiments of this application.

It should be noted that, in embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that communication can be performed according to the method provided in embodiments of this application by running a program that records code of the method provided in embodiments of this application. For example, the method provided in embodiments of this application may be performed by a terminal device or a network device, or may be performed by a functional module that is in the terminal device or the network device and that can invoke a program and execute the program.

In addition, methods in aspects of this application may be implemented through programming, and a computer program that can be accessed by a computer-readable component, carrier, or medium is formed. For example, the computer-readable medium may include but is not limited to: a magnetic storage component (for example, a hard disk drive, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry instructions and/or data.

It should be understood that FIG. 1 is merely an example, and the communication system may further include another network device. Details are not described herein again.

It should be understood that point-to-point transmission between the terminal device and the network device shown in FIG. 1 is merely an example.

For example, the terminal device and the network device may alternatively be in a form of a multi-hop single connection. For example, as shown in FIG. 2, the terminal device is connected to an access point 1, and an access point 2 is connected to a macro base station.

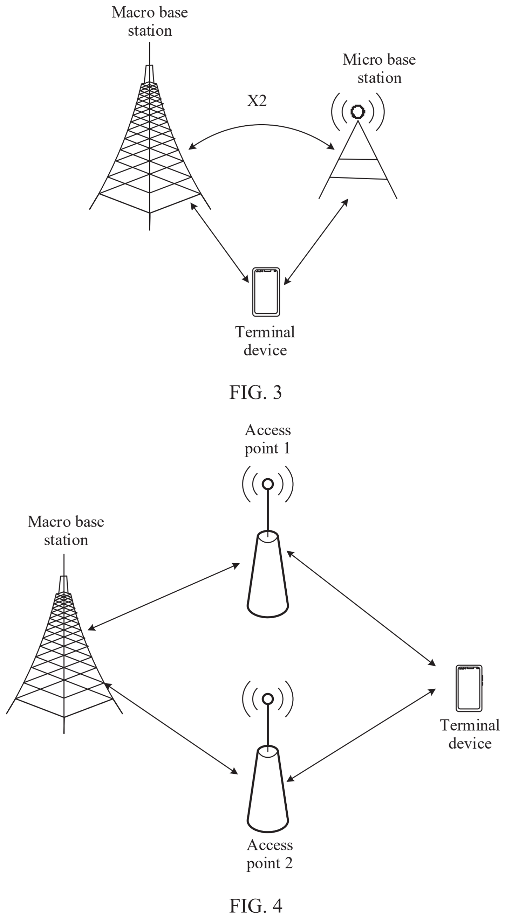

For another example, the terminal device and the network device may alternatively be in a form of dual connectivity (dual connectivity, DC). For example, as shown in FIG. 3, the terminal device is connected to both a macro base station and a micro base station.

For another example, the terminal device and the network device may alternatively be in a form of a multi-hop multi-connection. For example, as shown in FIG. 4, an access point 1 is connected to a macro base station, an access point 2 is connected to the macro base station, and a terminal device is connected to the access point 1 and the access point 2.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to similar technical problems.

For the communication system shown in FIG. 1, the terminal device 101 usually moves. In this case, the terminal device needs to be handed over between different cells, to ensure service continuity.

It should be noted herein that a specific type of cell handover is not limited in this embodiment. For example, it is assumed that a cell after the terminal device is handed over is referred to as a target cell, and a cell before the terminal device is handed over is referred to as a source cell. In this case, both the target cell after the handover and the source cell before the handover may belong to a same access network device, or the target cell after the handover and the source cell before the handover belong to different access network devices.

Generally, when the terminal device needs to be handed over from the source cell to the target cell, after the terminal device receives a cell handover command for handover to the target cell, the terminal device usually further needs to perform processes such as uplink synchronization with the target cell, downlink synchronization with the target cell, beam management of the target cell, and channel quality measurement of the target cell, thereby normally transmitting data.

In other words, after receiving the cell handover command, the terminal device further needs to perform processes such as uplink synchronization with the target cell, downlink synchronization with the target cell, beam management of the target cell, and channel quality measurement of the target cell, to ensure successful handover, thereby normally transmitting data.

For ease of understanding embodiments of this application, the following first describes completion of uplink synchronization between the terminal device and the cell.

It should be understood that, different terminal devices implement uplink transmission through orthogonal multiple access (for example, OFDM/DFT-S-OFDM), but the terminal devices may be located at different locations in a cell (that is, distances between the different terminal devices and a base station are different). In this case, when uplink transmission of a plurality of terminal devices arrives at the base station, because transmission delays are different, different terminal devices may not be orthogonal, that is, mutual interference exists.

Therefore, to ensure orthogonality of the uplink transmission and avoid the interference between terminal devices, a TA technology is designed. Terminal devices with different transmission delays perform sending at different time points in advance, to ensure that time points at which different terminal devices arrive at the base station are aligned. The base station can correctly decode data provided that an arrival time difference between different terminals is within a CP (cyclic prefix) range.

For ease of understanding, the following describes a principle of the TA by using an example in which two terminal devices served by the base station send uplink signals. For example, it is assumed that the two terminals served by the base station are referred to as UE 1 and UE 2. Downlink timing of the base station is used as a reference (time 0). The UE 1 receives DL (including uplink scheduling information) at a moment t1, and the UE 2 receives DL (including uplink scheduling information) at a moment t2. If no timing advance adjustment is performed, an arrival moment of the uplink signal of the UE 1 is 2t1. Similarly, an arrival moment of the uplink signal of the UE 2 is 2t2. The UE 1 and the UE 2 cannot arrive at the base station at the same time, causing interference. If timing advance adjustment is performed, after receiving the scheduling information, the UE 1 performs sending 2t1 in advance, and after receiving the scheduling information, the UE 2 performs sending 2t2 in advance. In this case, the UE 1 and the UE 2 arrive at the base station at a same moment, and there is no interference.

According to the protocol 38211, a moment at which a terminal device sends an uplink signal should be earlier than a moment at which a base station sends a downlink signal: *T_{TA} =* (*N_{TA} + N_{TA,offset}*)*T_{c}*.

*N_{TA}* is determined based on a TA value delivered by the base station. For random access, *N_{TA} =* 0.

*N_{TA,offset}* is a fixed value, and is 39936 or 25600 in low-frequency TDD. This value is used for uplink-downlink handover. More specifically, 39936 is used for alignment between NSA and LTE.

*T_{c}* represents a time unit.

It can be learned that, to determine a time for which the terminal device needs to send the uplink signal in advance, the terminal device needs to be notified of a timing advance (timing advance, TA) for sending a signal to a cell, so that the terminal device implements uplink synchronization with the cell based on the TA.

In other words, if uplink synchronization needs to performed, the terminal device needs to know the TA of the cell.

Currently, there are the following three manners for the terminal device to learn of the *TA* of the cell:
(1) During random access, the TA value of the cell is carried in a random access response (random access response, RAR).

The TA in the RAR ranges from 0 to 3846. After receiving the RA message, the terminal determines *N_{TA}* according to *N_{TA} = TA* * 16 ** TS. TS* represents a time unit.

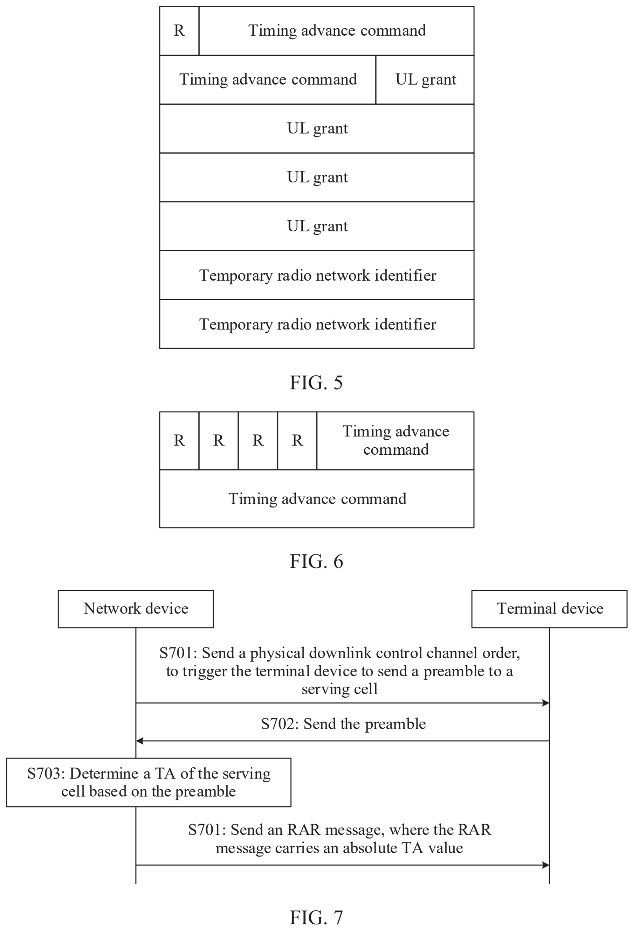

For example, a structure of the RAR message is shown in FIG. 5, and the RAR message includes a reserved field (also referred to as an R field), a timing advance command (timing advance command) field, an uplink grant (also referred to as a UL Grant) field, and a temporary radio network identifier (also referred to as a temporary C-RNTI) field.

The TA value is carried in the timing advance command field. It should be noted herein that, for specific descriptions of the fields, refer to descriptions in a related technology. Details are not described herein again.

(2) The TA value of the cell is notified through MAC-CE signaling.

A type and a format of the TA value are the same as that in (1), and are mainly used in a two-step random access procedure.

However, in this manner, the base station may indicate the TA value to the terminal device at any time through the MAC-CE signaling. In addition, in this manner, the TA value is an absolute value.

For example, a diagram of indicating the TA in this manner is shown in FIG. 6, and the reserved field and the timing advance command (Timing Advance Command) field are included. The TA value is carried in the timing advance command field. It should be noted herein that, for specific descriptions of the fields, refer to descriptions in a related technology. Details are not described herein again.

(3) If the TA is updated again, new MAC-CE signaling may be used for implementation.

In this manner, an adjustment value range of the TA is from 0 to 63.

Specifically, in this manner, *N_{TA}* may be calculated according to the following formula: *N_{TA_neW} = N_{TA_old}* + (*TA* - 31) * 16 * 64/2*^{µ}*.

It can be learned from the formula *N_{TA_new}* that, when the *TA* value is less than 31, the terminal device is enabled to delay sending data, that is, the terminal device is closer to the base station.

It should be understood that, although the terminal device and the network device implement uplink synchronization in a random access process, a time at which the uplink signal arrives at the network device may change due to movement of the terminal device. Therefore, the TA also needs to be continuously updated, to ensure uplink synchronization.

The foregoing describes manners of learning of the TA by the terminal device. It should be understood that, if the network device sends the TA to the terminal device, the TA needs to be determined first. Currently, the network device determines the TA in the following manners.
(1) The TA is determined in a physical downlink control channel (physical downlink control channel, PDCCH) order (order) triggering manner.
(2) The TA is determined based on an SRS.
(3) The TA is determined through a downlink timing difference.

Specifically, for the PDCCH order triggering manner shown in FIG. 7, a procedure of triggering the PDCCH order to obtain the TA includes the following steps. S701: The network device sends the PDCCH order to the terminal device, to trigger the terminal device to send a preamble (preamble) to a serving cell. A related configuration in the PDCCH order is configured by a higher layer, for example, a DCI format identifier, a random access sequence index, a preamble resource, a transmission occasion, or an associated reference signal. S702: The terminal device sends the preamble. S703: After receiving the preamble, the base station determines a TA of the serving cell based on the preamble. S704: Send an RAR message to the terminal device. Correspondingly, the terminal device receives the RAR message in an RAR window, where the RAR message carries an absolute TA value.

Specifically, when the TA is obtained based on the PDCCH order, there are two types: contention-free random access (contention-free random access, CFRA) and contention-based random access (contention-based random access, CBRA).

For the CFRA,
a preamble/RAR beam is the same as a PDCCH beam, and a type D reference signal (reference signal, RS) of the PDCCH order is selected for a path loss reference signal (path loss reference signal, PL-RS).

For the CBRA,
a preamble/RAR beam is the same as a synchronization signal block (synchronization signal block, SSB) beam associated with an RO, and an SSB associated with the RO is selected for the PL-RS.

For concepts of the RAR beam and the PL-RS, refer to descriptions in a related technology (for example, including 32.213 8.2 in the communication protocol). Details are not described herein again.

Specifically, a manner of obtaining the TA based on the SRS includes: The network device may configure a periodic or semi-persistent SRS resource for the terminal device, and then the terminal device sends the SRS resource to a target cell that needs to obtain the TA. Then, the target cell measures a corresponding timing difference, calculates the TA, and indicates the TA to the terminal device through downlink signaling. In addition, the network device may alternatively configure an aperiodic SRS resource and trigger the aperiodic SRS resource through DCI. Then, the terminal device sends the SRS resource to the target cell that needs to obtain the TA, to calculate the TA.

Specifically, a manner of obtaining the TA based on the downlink timing difference includes: The terminal device determines the TA of the target cell based on downlink timing of a primary serving cell, downlink timing of the target cell, and a TA of the primary serving cell.

According to 3GPP Rel-17, the foregoing processes such as uplink synchronization with the target cell, downlink synchronization with the target cell, beam management of the target cell, and channel quality measurement of the target cell are all performed after the terminal device receives the cell handover command, resulting in a large handover delay.

According to 3GPP Rel-18, L1/L2 mobility enhancement, which is also referred to as lower-layer triggered mobility (lower-layer triggered mobility, LTM), is introduced, to reduce the handover delay and signaling overheads, ensure a high-quality service, and implement smooth switching of a low-delay and large-capacity service (for example, XR/CG). The L1/L2 mobility enhancement proposes that processes such as downlink synchronization, uplink synchronization, beam management, and channel quality measurement are performed on the target cell before the handover (before the cell handover command is received), so that data can be transmitted immediately after the handover to the target cell. This reduces a delay of the handover to the target cell.

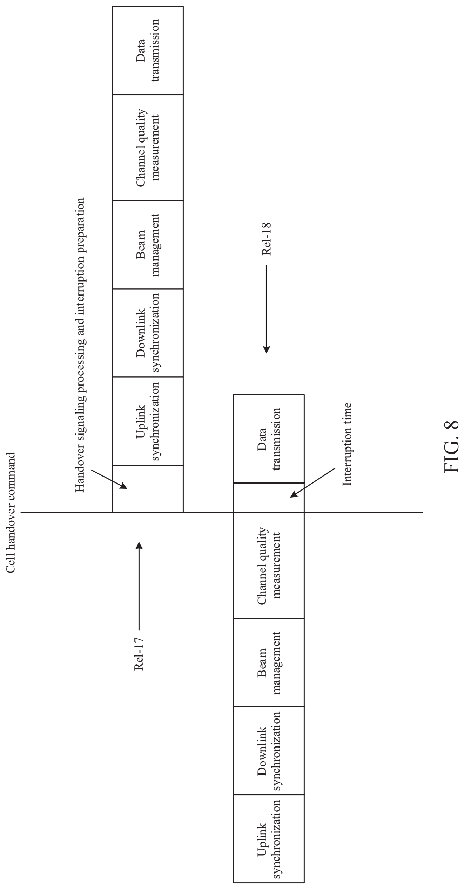

For example, FIG. 8 is a diagram of cell handover processes respectively proposed in Rel-17 and Rel-18.

As shown in FIG. 8, in Rel-17, after the terminal device receives the cell handover command, the terminal device first performs handover signaling processing and a terminal preparation process, and then performs data transmission after processes such as uplink synchronization with the target cell, downlink synchronization with the target cell, beam management of the target cell, and channel quality measurement of the target cell are completed. Generally, duration from receiving the cell handover command by the terminal device to starting data transmission is at least 75 ms. It can be learned that the duration from receiving the cell handover command by the terminal device to starting data transmission is long.

If the LTM proposed in Rel-18 is used, as shown in FIG. 8, before receiving the cell handover command, the terminal device may first complete processes such as uplink synchronization with the target cell, downlink synchronization with the target cell, beam management of the target cell, and channel quality measurement of the target cell. Then, data transmission may be performed after an interruption time (for example, 5 ms). This reduces a delay from receiving the cell handover command by the terminal device to starting data transmission.

Currently, the terminal device that supports the LTM may report an LTM support capability to the base station. Then, the base station configures at least one cell for the terminal device, and configures a related parameter of each of the at least one cell. The related parameter of each cell includes, for example, a measurement resource and transmission channel information. In addition, the base station further configures one or more candidate cells for the terminal device. These candidate cells are used by the terminal device to perform processes such as downlink synchronization, uplink synchronization, beam management, and channel quality measurement.

It should be noted that each candidate cell described this time is a cell other than the primary serving cell in the at least one cell configured by the access network device for the terminal device.

It should be noted herein that when the base station configures the at least one cell, a type of the at least one cell is not limited in this application. For example, the at least one cell may include a primary serving cell, a secondary serving cell, a non-serving cell, or the like.

It should be noted herein that a type of the candidate cell selected from the at least one cell is not limited in this application. For example, intra-frequency and synchronization may be implemented between the serving cell and the candidate cell, intra-frequency and asynchronization may be implemented between the serving cell and the candidate cell, inter-frequency and synchronization may be implemented between the serving cell and the candidate cell, and inter-frequency and asynchronization may be implemented between the serving cell and the candidate cell.

In addition, scenarios may be further classified, for example, switching from a low frequency to a low frequency, switching from a low frequency to a high frequency, and switching from a high frequency to a high frequency. This is not limited in this application either.

It should be noted herein that, in this application, these candidate cells are also referred to as target cells, candidate target cells, neighboring cells, candidate neighboring cells, or non-service areas. This constitutes no limitation on this application.

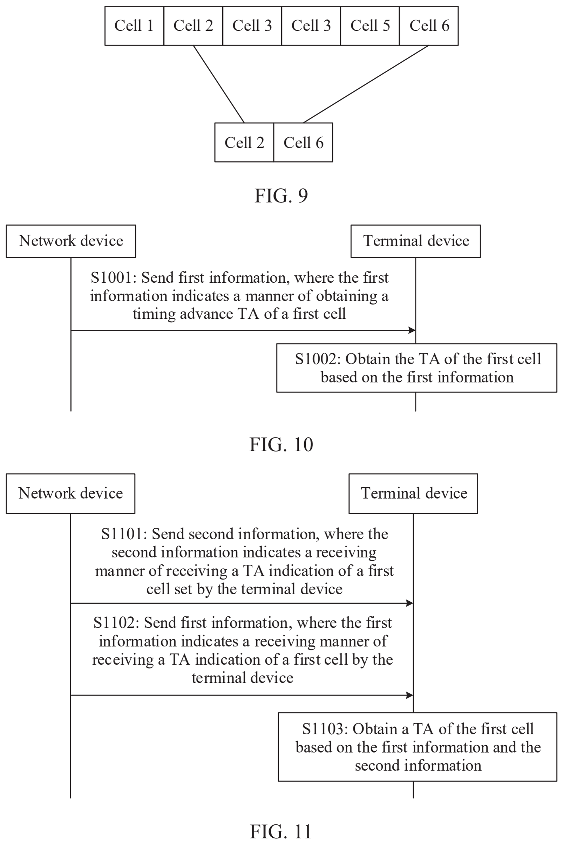

In an example, as shown in FIG. 9, after the terminal device reports the LTM support capability, the access network device configures related parameter information of six cells: a cell 1, a cell 2, a cell 3, a cell 4, a cell 5, and a cell 6, for the terminal device. Then, the cell 2 and the cell 6 are selected from the six cells: the cell 1, the cell 2, the cell 3, the cell 4, the cell 5, and the cell 6, as candidate cells for the terminal device to perform processes such as downlink synchronization, uplink synchronization, beam management, and channel quality measurement before the cell handover command is received.

On the contrary, from a perspective of the terminal device, when the terminal device receives configuration information indicating that the cell 2 and the cell 6 are the candidate cells, behavior of the terminal device includes downlink synchronization before the handover, beam measurement and reporting, uplink synchronization, channel state information obtaining, and the like. Before the handover, the terminal device needs to implement the foregoing corresponding behavior for the candidate cell 2 and the candidate cell 6 when communicating (or connecting) with the serving cell.

It should be noted herein that FIG. 9 is merely described by using an example in which the at least one cell is six cells and two cells are selected from the six cells as the candidate cells, but the quantities do not constitute a limitation on this application.

However, currently, for the terminal device that supports an LTM feature, only a concept of completing processes such as downlink synchronization, uplink synchronization, beam management, and channel quality measurement on each configured candidate cell before receiving the handover command is proposed. However, there is no specific solution for specific implementation.

For example, for uplink synchronization, in a current solution of PDCCH order triggering, only the TA of the primary serving cell can be obtained, and a TA of a candidate cell outside the primary serving cell cannot be obtained.

Therefore, how to reduce a handover delay is still an urgent technical problem to be resolved.

In view of this, this application provides a communication method and a communication apparatus, to reduce a handover delay when a terminal device performs cell handover.

It should be noted herein that, to describe the communication method for reducing a handover delay provided in this application more clearly, in the following embodiments, an example in which an uplink synchronization process is completed for a configured candidate cell before a handover command is received is used to describe the communication method provided in this application. However, it should be understood that a concept of the communication method provided in this application is also applicable to completing processes such as downlink synchronization, beam management, and channel quality measurement on each configured candidate cell before the handover command is received. This does not constitute a limitation on this application.

The following describes a communication method provided in this application with reference to the accompanying drawings.

The communication method provided in this application may also be referred to as a method for reducing a handover delay or a method for obtaining a TA of a candidate cell. The candidate cell is a cell other than a primary serving cell, for example, a non-serving cell or a secondary serving cell.

As shown in FIG. 10, the communication method provided in this application includes the following steps.

S1001: A network device sends first information to a terminal apparatus, and correspondingly, the terminal device receives the first information, where the first information indicates a manner of obtaining a timing advance TA of a first cell.

In this embodiment, the network device may be considered as an access network device (or a base station) to which a serving cell accessed by the terminal device at a current moment belongs.

In this embodiment, the network device sends the first information to the terminal device, where the first information indicates the manner of obtaining the TA of the first cell.

Specifically, a specific form of the first cell is not limited in this embodiment.

For example, in a first scenario, the first cell in this embodiment is a candidate cell. It should be noted that the candidate cell in this embodiment refers to any cell other than a primary serving cell, and is also referred to as a neighboring cell, a candidate neighboring cell, a target cell, or a candidate target cell.

It should be understood that a type of the candidate cell may be a secondary serving cell, a non-serving cell (a cell other than the primary serving cell and the secondary serving cell), a cell whose PCI is different from a service area, or the like.

In other words, in the first scenario, the network device in this embodiment sends the first information to the terminal device, where the first information indicates the manner of obtaining the TA of the first cell other than the primary serving cell.

For another example, in a second scenario, the first cell in this embodiment is a primary serving cell.

In other words, in the second scenario, the network device in this embodiment sends the first information to the terminal device, where the first information indicates the manner of obtaining a TA of the primary serving cell.

In this embodiment, when the first information sent by the network device indicates the manner of obtaining the TA of the first cell, in a first implementation solution, the first information specifically indicates a receiving manner of receiving a TA indication of the first cell by the terminal device, and the TA indication includes the TA. The receiving manner of receiving the TA indication includes any one of the following:
(1) The TA indication of the first cell is received through an RAR, that is, the TA indication is carried in the RAR.
   Optionally, in this application, the RAR may be delivered from the primary serving cell to the terminal device, or the RAR may be delivered from the first cell to the terminal device. That the RAR is delivered from the first cell to the terminal device may be specifically understood as that the RAR is delivered from a base station to which the first cell belongs to the terminal device. That the RAR is delivered from the primary serving cell to the terminal device may be specifically understood as the RAR is delivered from a base station to which the primary serving cell belongs to the terminal device.
(2) The TA indication of the first cell is received through a cell handover command, that is, the TA indication is carried in the cell handover command.
   In other words, the terminal device receives the TA indication of the first cell through the cell handover command sent by the base station to which the serving cell accessed by the terminal device at the current moment belongs.
(3) The TA indication of the first cell is received through independent signaling (also referred to as third information in this application). For example, the third information includes at least one of the following: medium access control-control element (medium access control-control element, MAC-CE) signaling and downlink control information (downlink control information, DCI) signaling.

It should be noted herein that how the first information specifically indicates is not limited in this embodiment.

For example, in an implementation solution a, the first information may directly indicate whether the terminal device receives the TA indication of the first cell through the RAR, or receives the TA indication of the first cell through the cell handover command, or receives the TA indication of the first cell through the independent signaling. It may be understood that this manner may also be considered as an explicit indication.

For another example, in an implementation solution b, the first information may indicate, to the terminal device, whether an RAR of the first cell is configured. Then, if the first information indicates that the RAR of the first cell is configured (which is also referred to as indicating that the RAR of the first cell is enabled), it is considered that the terminal device is indicated to receive the TA indication of the first cell through the RAR. Correspondingly, when the terminal device receives the first information, if the first information indicates, to the terminal device, that the RAR of the first cell is configured, the terminal device receives the TA indication of the first cell through the RAR. Otherwise (to be specific, the RAR of the first cell is not configured, which is also referred to as indicating that the RAR of the first cell is disabled), it is considered that the terminal device is indicated to receive the TA indication of the first cell in another manner. Correspondingly, when the terminal device receives the first information, if the first information indicates, to the terminal device, that the RAR of the first cell is not configured, the terminal device receives the TA indication of the first cell in another manner. For example, the TA indication of the first cell is received through the handover command or the TA indication of the first cell is received through separate signaling.

For another example, in an implementation solution c, the first information may indicate, to the terminal device, whether an RAR of the first cell is configured. Then, if the RAR of the first cell is configured, the terminal device may be further configured to receive the TA indication through the RAR, or receive the TA indication through a handover command or independent signaling, or receive the TA indication in each receiving manner.

S1002: Obtain the TA of the first cell based on the first information.

In this embodiment, after receiving the first information, the terminal device obtains the TA of the first cell based on the first information.

Specifically, if the first information sent by the network device indicates the receiving manner of receiving the TA indication of the first cell by the terminal device, that the terminal device obtains the TA of the first cell based on the first information means that the terminal device receives the TA indication of the first cell in the receiving manner indicated by the first information. The TA indication includes the TA of the first cell, so that the terminal device obtains the TA of the first cell.

For example, if the network device sends the first information in the manner of the implementation solution a in S1001:

If the first information indicates to receive the TA indication through the RAR, the terminal device receives the TA indication of the first cell through the RAR.

If the first information indicates to receive the TA indication through the cell handover command, the terminal device receives the TA indication of the first cell through the cell handover command.

If the first information indicates to receive the TA indication through the independent signaling, the terminal device receives the TA indication of the first cell through the independent signaling.

For example, if the network device sends the first information in the manner of the implementation solution b in S1001:

When the terminal device receives the first information, if the first information indicates, to the terminal device, that the RAR of the first cell is configured, the terminal device receives the TA indication of the first cell through the RAR. Otherwise (to be specific, the RAR of the first cell is not configured), the terminal device receives the TA indication of the first cell in another manner. For example, the TA indication is received through a handover command or the TA indication is received through separate signaling.

It can be learned that, according to the communication method provided in this embodiment, when the first cell is the candidate cell, an obtaining manner of obtaining the TA of the first cell is configured for the terminal device based on the first information. Therefore, before receiving the cell handover command, the terminal device may obtain the TA of the first cell in a manner indicated by the first information, to complete uplink synchronization with the first cell. In this way, after the terminal device is handed over to the first cell, the terminal device may no longer perform an uplink synchronization process. Therefore, a handover delay of handover to the first cell can be reduced.

For example, in an implementation solution, after configuring the first information for the terminal device, the network device to which the serving cell currently serving the terminal device belongs may trigger, based on a downlink control channel PDCCH order, the terminal device to send a preamble (Preamble) to the first cell. Then, the first cell determines the TA of the first cell based on the Preamble sent by the terminal device, and sends the TA indication to the terminal device. Correspondingly, the terminal device receives, based on the receiving manner indicated by the first information, the TA indication sent by the first cell. Optionally, after the first cell determines the TA of the first cell based on the Preamble sent by the terminal device, the corresponding TA indication may be further sent to the terminal device via the network device to which the serving cell currently serving the terminal device belongs.

It should be understood that the first cell in FIG. 10 may be any cell in a candidate cell set configured by the network device for the terminal device. For example, if the candidate cell set configured by the network device for the terminal device includes 10 candidate cells, any one of the 10 candidate cells may be considered as the first cell in the embodiment in FIG. 10. It should be understood that, in this scenario, the network device needs to configure one piece of information (namely, the first information) for each candidate cell for the terminal device, to indicate, to the terminal device, a manner of receiving a TA indication when a TA of a corresponding candidate cell is obtained. It may be understood that, in this manner, the network device may flexibly schedule a terminal device that supports the RAR, a terminal device that does not support the RAR, and a terminal device that supports both the RAR and no RAR (support both obtaining the TA indication through the RAN and obtaining the TA indication in another manner).

Optionally, in this application, the network device may further send second information to the terminal device. Correspondingly, the terminal device receives the second information, where the second information indicates a manner of obtaining a TA of a first cell set, and the first cell is included in the first cell set. In other words, in this embodiment, in addition to sending the first information to the terminal device to indicate the obtaining manner of obtaining the TA of the first cell, the network device further sends the second information to the terminal device to indicate the obtaining manner of obtaining the TA of the first cell set including the first cell by the terminal device.

In this application, when the network device further sends the second information to the terminal device, that the terminal device obtains the TA of the first cell based on the first information includes: obtaining the TA of the first cell based on the first information and the second information.

With reference to FIG. 11, the following describes an embodiment in which the terminal device obtains the TA of the first cell when the network device further sends the second information to the terminal device.

It should be noted herein that, in this embodiment, an example in which the first cell set is a candidate cell set (that is, all cells included in the first cell set are candidate cells), and the obtaining manners of the TA indicated by the first information and the second information are both indicating the receiving manner of receiving the TA indication by the terminal device is used for description.

S1101: A network device sends second information to a terminal device, where the second information indicates a receiving manner of receiving a TA indication of a first cell set by the terminal device.

For example, a cell set 1 configured by the network device for the terminal device includes four candidate cells. In this case, the network device sends the second information to the terminal device to indicate a receiving manner of receiving TA indications of all the candidate cells in the cell set 1.

Similarly, in this embodiment, how the second information specifically indicates is not limited in this embodiment.

For example, in an implementation solution d, the second information may directly indicate whether the terminal device receives the TA indication of the first cell set through an RAR, or receives the TA indication of the first cell set through a handover command, or receives the TA indication of the first cell set through independent signaling. It may be understood that this manner may also be considered as an explicit indication.

For another example, in an implementation solution e, the second information may indicate, to the terminal device, whether the RAR of the first cell set is configured. Then, if the RAR of the first cell set is configured (which is also referred to as indicating that the RAR of the first cell set is enabled), it is considered that the terminal device is indicated to receive the TA indication of the first cell set through the RAR. Correspondingly, when the terminal device receives the second information, if the second information indicates, to the terminal device, that the RAR of the first cell set is configured, the terminal device receives the TA indications of all cells in the first cell set through the RAR. Otherwise (to be specific, the RAR of the first cell set is not configured, which is also referred to as indicating that the RAR of the first cell set is disabled), it is considered that the terminal device is indicated to receive the TA indication of the first cell set in another manner. Correspondingly, when the terminal device receives the second information, if the second information indicates, to the terminal device, that the RAR of the first cell set is not configured, the terminal device receives the TA indications of all the cells in the first cell set in another manner. For example, the TA indications of all the cells in the first cell set are received through the handover command or the TA indications of all the cells in the first cell set are received through separate signaling.

S1102: The network device sends first information to the terminal device, where the first information indicates a receiving manner of receiving the TA indication of the first cell by the terminal device.

That the cell set 1 in S1101 includes four candidate cells is still used as an example. It is assumed that the four candidate cells are referred to as a candidate cell 1, a candidate cell 2, a candidate cell 3, and a candidate cell 4. In this case, each of the four candidate cells may be considered as the first cell in this application.

In other words, in this embodiment, the network device further configures one piece of information (namely, the first information) for each cell in the first cell set for the terminal device, to indicate, to the terminal device, a manner of receiving a TA indication of a corresponding cell.

For example, the network device may configure configuration information of the candidate cell 1 for the terminal device to indicate a receiving manner of receiving a TA indication of the candidate cell 1, configure configuration information of the candidate cell 2 for the terminal device to indicate a receiving manner of receiving a TA indication of the candidate cell 2, configure configuration information of the candidate cell 3 for the terminal device to indicate a receiving manner of receiving a TA indication of the candidate cell 3, and configure configuration information of the candidate cell 4 for the terminal device to indicate a receiving manner of receiving a TA indication of the candidate cell 4.

S1103: The terminal device obtains the TA of the first cell based on the first information and the second information.

For example, if the second information indicates, in the manner in the implementation solution e, the receiving manner of receiving the TA of the first cell set by the terminal device, and the first information indicates, to the terminal device in the manner in the solution b, the receiving manner of receiving the TA of the first cell. In this case, the obtaining the TA of the first cell based on the first information and the second information includes:
(1) If the second information indicates that the RAR is disabled (that is, the second information indicates, to the terminal device, that the RAR of the first cell set is not configured),
   the terminal device does not receive the TA of the first cell through the RAR, but receives the TA of the first cell in another manner.
   It may be understood that, in this manner, that the terminal device obtains the TA of the first cell based on the first information and the second information may be considered as obtaining the TA of the first cell based on the first information.
(2) If the second information indicates that the RAR is enabled (that is, the second information indicates, to the terminal device, that the RAR of the first cell set is configured),
   if the first information indicates that the RAR is disabled, the terminal device does not receive the TA of the first cell through the RAR, but receives the TA of the first cell in another manner; or if the first information also indicates that the RAR is enabled, the terminal device receives the TA of the first cell through the RAR.

In other words, in this scenario, when the second information indicates that the RAR is enabled, the receiving manner of receiving the TA of the first cell by the terminal device is determined based on the first information configured for the first cell, that is, the terminal device determines, based on both the first information and the second information, the manner of receiving the TA of the first cell.

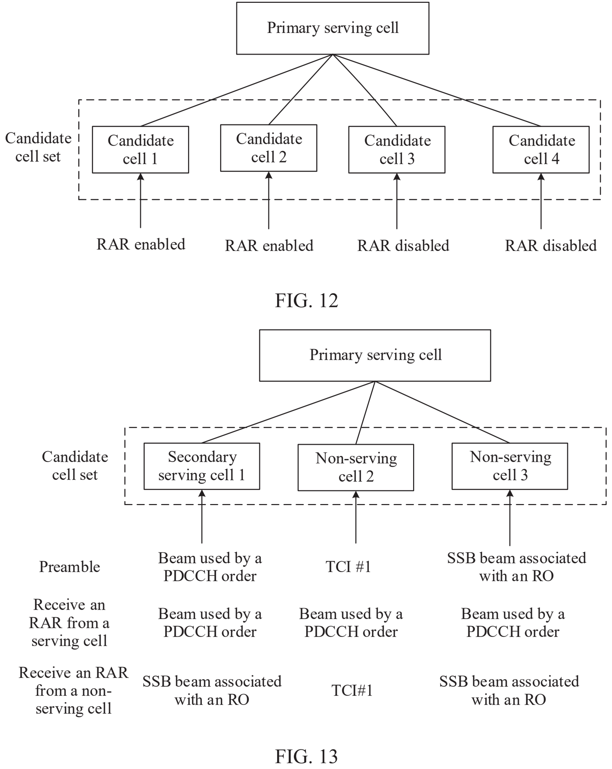

For ease of understanding, FIG. 12 is a diagram of RAR configuration according to this application. As shown in FIG. 12, a first candidate cell set includes four candidate cells: a candidate cell 1, a candidate cell 2, a candidate cell 3, and a candidate cell 4. In this case, when a network device indicates, to a terminal device, a manner of receiving a TA indication of each candidate cell, one piece of second information may be configured for a primary serving cell to indicate whether an RAR in a candidate cell set of the serving cell is enabled. Then, one piece of first information is configured for the candidate cell 1 to indicate whether an RAR of the candidate cell 1 is enabled, one piece of first information is configured for the candidate cell 2 to indicate whether an RAR of the candidate cell 2 is enabled, one piece of first information is configured for the candidate cell 3 to indicate whether an RAR of the candidate cell 3 is enabled, and one piece of first information is configured for the candidate cell 4 to indicate whether an RAR of the candidate cell 4 is enabled. Then, if the second information indicates that the RAR is disabled, the terminal device does not use the RAR to receive the TA indication for the four candidate cells: the candidate cell 1, the candidate cell 2, the candidate cell 3, and the candidate cell 4. If the second information indicates that the RAR is enabled, if the second information configured for the candidate cell 1 and the candidate cell 2 indicates that the RAR is enabled, and the second information configured for the candidate cell 3 and the candidate cell 4 indicates that the RAR is disabled, as shown in FIG. 12, the terminal device receives the TA indication of the candidate cell 1 and the candidate cell 2 through the RAR, and does not receive the TA indication of the candidate cell 1 and the candidate cell 2 through the RAR.

It may be understood that, in the communication method provided in this embodiment, the network device sends the first information and the second information to the terminal device, so that the terminal device determines a receiving manner of receiving a TA indication of a first cell. It may be understood that, for the communication method provided in this application, the network device may flexibly schedule a terminal device that supports the RAR, a terminal device that does not support the RAR, and a terminal device that support both the RAR and no RAR (support both obtaining the TA indication through the RAN and obtaining the TA indication in another manner).

In an optional embodiment, in this application, the network device may alternatively send only the second information to the terminal device. The second information indicates a manner of obtaining a TA of a first cell set, and the first cell is included in the first cell set. Correspondingly, after receiving the second information, the terminal device obtains the TA of the first cell in a manner indicated by the second information.

For example, the second information may indicate, to the terminal device, whether an RAR of the first cell set is configured. Then, if the RAR of the first cell set is configured (which is also referred to as indicating that the RAR is enabled), it is considered that the terminal device is indicated to receive a TA indication of the first cell set through the RAR. Correspondingly, when the terminal device receives the second information, if the second information indicates, to the terminal device, that the RAR of the first cell set is configured, the terminal device receives the TA indication of all cells in the first cell set through the RAR. Otherwise (to be specific, the RAR of the first cell set is not configured, which is also referred to as indicating that the RAR is disabled), it is considered that the terminal device is indicated to receive the TA indication of the first cell set in another manner. Correspondingly, when the terminal device receives the second information, if the second information indicates, to the terminal device, that no RAR of the first cell set is configured, the terminal device receives the TA indication in another receiving manner for all cells in the first cell set.

It should be understood that, in this implementation, the network device indicates, by using only one piece of second information, a receiving manner of receiving TAs of all the cells in the first cell set by the terminal device. Therefore, signaling overheads can be reduced.

In an optional embodiment, the communication method in this application further includes: The terminal device sends fourth information to the network device, where the fourth information indicates an RAR support capability of the terminal device; and correspondingly, after receiving the fourth information, the network device determines, based on the RAR support capability indicated by the fourth information, the first information and/or the second information to be sent to the terminal device.

It should be noted herein that a manner in which the terminal device reports the RAR support capability is not limited in this embodiment.

For example, in an implementation solution, that the terminal device supports an RAR is used as a baseline capability, and then terminal devices with two capabilities are defined: a terminal device that supports only the RAR, and a terminal device that supports both the RAR and no RAR.

The terminal device that supports only the RAR may be understood as that the terminal device supports receiving the TA indication through only the RAR. The terminal device that supports both the RAR and no RAR may be understood as that the terminal device supports receiving the TA indication through the RAR and also supports receiving the TA indication in another manner. It should be understood that, in this implementation solution, when the terminal device indicates, to the network device by reporting the fourth information, the RAR support capability by the terminal device, the fourth information indicates any one of the following: the terminal device supports the RAR, and the terminal device supports both the RAR and no RAR.

For example, in another implementation solution, three types of terminal devices may be defined: a terminal device that supports only the RAR, a terminal device that supports both the RAR and no RAR, and a terminal device that supports no RAR.

The terminal device that supports no RAR may be understood as that the terminal device does not support receiving the TA indication through the RAR. It should be understood that, in this implementation solution, when the terminal device indicates, to the network device by reporting the fourth information, the RAR support capability of the terminal device, the fourth information indicates any one of the following: that the terminal device supports the RAR, that the terminal device supports both the RAR and no RAR, and that the terminal device supports no RAR.

Optionally, in this application, when the network device indicates the terminal device to receive the TA indication of the first cell through the RAR, the RAR may be delivered from the primary serving cell to the terminal device (applicable to an intra-Du scenario).

Alternatively, the RAR may be delivered from the first cell to the terminal device. In this case, interaction between the primary serving cell and the first cell is not required.

Optionally, in this application, before the terminal device obtains the TA of the first cell based on the first information, the method further includes: sending a preamble (preamble) to the first cell through a first beam, where the preamble is used by the first cell to determine a TA value of the first cell, and the first beam is any one of the following: an SSB beam associated with an RO, a beam indicated by one of active transmission configuration indicators TCI of the first cell, a beam used by a downlink control channel PDCCH order, and a beam indicated by the PDDCH order.

For the beam used by the downlink control channel PDCCH order, the beam indicated by the PDDCH order is specifically as follows: When the first cell and the serving cell belong to a same beam update group, the beam used by the PDCCH order or the beam indicated by the PDDCH order is selected for the first beam.

Optionally, in this application, the method further includes: determining transmit power of the preamble based on a PL-RS, where the PL-RS is any one of the following: an SSB associated with the RO, a reference signal indicated by or associated with an active transmission configuration indicator TCI of the first cell, a reference signal associated with a PDCCH, and a path loss reference signal indicated by the PDCCH order.

For the reference signal associated with the PDCCH, the path loss reference signal indicated by the PDCCH order is specifically as follows: When the first cell and the serving cell are in a same beam update group, the reference signal selected by the PL-RS is the reference signal associated with the PDCCH, and the PDCCH order indicates the path loss reference signal.

For ease of understanding, FIG. 13 is a diagram of beam selection according to an embodiment of this application. As shown in FIG. 13, a first candidate cell set includes a secondary serving cell 1, a non-serving cell 2, and a non-serving cell 3. In this case, when a terminal device sends a preamble to the secondary serving cell 1, a beam used by a PDCCH order may be used. When a preamble is sent to the non-serving cell 2, a beam indicated by a TCI (for example, a TCI #1) in active TCIs of a first cell may be used. When a preamble is sent to the non-serving cell 3, an SSB beam associated with an RO may be used.

Similarly, when a network device sends RARs of the secondary serving cell 1, the non-serving cell 2, and the non-serving cell 3 to the terminal device, the network device may send the RARs of the secondary serving cell 1, the non-serving cell 2, and the non-serving cell 3 to the terminal device through the PDCCH order. When the secondary serving cell 1 sends a TA indication of the secondary serving cell 1 to the terminal device, the secondary serving cell 1 may send the TA indication to the terminal device through the SSB beam associated with the RO. When the non-serving cell 2 sends a TA indication of the non-serving cell 2 to the terminal device, the non-serving cell 2 may send the TA indication to the terminal device through the beam indicated by a TCI (for example, a TCI #1) in active TCIs of the non-serving cell 2. When the non-serving cell 3 sends a TA indication of the non-serving cell 3 to the terminal device, the non-serving cell 3 may send the TA indication to the terminal device through the SSB beam associated with the RO.

Optionally, in this application, when the terminal device is indicated to receive the TA indication of the first cell through the RAR, the TA indication includes at least one of the following content: a first identifier, a TA value, and a second identifier. The first identifier indicates whether the TA value carried in the RAR is an absolute value, and the second identifier indicates the first cell or a first cell set.

Whether the value is an absolute value may also be replaced with whether the value is a relative value, whether the value is a relative value, a relative value, or an absolute value.

For example, the second identifier is any one of the following types: an LTM configuration index corresponding to the first cell, a cell identifier of the first cell, or a timing advance group (timing advance group, TAG) identifier corresponding to the first cell.

It should be understood that, in this implementation, the RAR supports both initial TA obtaining and TA update.

Optionally, in this embodiment, when first information sent by the network device indicates a manner of obtaining a TA of the first cell, in a second implementation solution, the first information may also indicate a manner in which the terminal device determines the TA of the first cell. A manner of determining the TA includes any one of the following: sending a preamble to the first cell, or sending an uplink reference signal to the first cell, or determining the TA through a downlink timing difference, or determining the TA through a TRP.

Sending the preamble to the first cell may be considered as determining the TA in a PDCCH order manner. Sending the uplink reference signal (for example, an SRS) to the first cell may be considered as determining the TA in an uplink reference signal manner. For detailed descriptions of obtaining the TA through the SRS, determining the TA through the downlink timing difference, and determining the TA through the TRP, refer to the descriptions in the foregoing related parts or related technologies of this application. Details are not described herein again.

In addition, it should be noted that a meaning of indicating a manner in which the TA is determined is different from a meaning of indicating the terminal device to determine the TA. For indicating the manner in which the TA is determined, the manner is emphasized. In other words, in this embodiment, that the first information indicates a manner in which the TA is determined may be understood as a manner in which the terminal device enables the network device to determine the TA of the first cell.

Optionally, if the first information sent by the network device indicates a manner in which the terminal device determines the TA of the first cell, that the terminal device obtains the TA of the first cell based on the first information means that the terminal device determines the TA of the first cell in the manner indicated by the first information.

For example, if the first information indicates that the terminal device determines the TA of the first cell by sending the preamble to the first cell, the terminal device obtains the TA of the first cell by sending the preamble to the first cell.

For example, if the first information indicates the terminal device to obtain the TA of the first cell by sending the uplink reference signal to the first cell, the terminal device sends the uplink reference signal to the first cell to obtain the TA of the first cell.

For example, if the first information indicates the terminal device to determine the TA of the first cell based on the downlink timing difference, the terminal device determines the TA of the first cell through a downlink timing difference of a primary serving cell, a downlink timing difference of the first cell, and a TA of the primary serving cell.

For example, if the first information indicates the terminal device to obtain the TA of the first cell through the TRP, the terminal device obtains the TA of the first cell through the TRP.

Optionally, the method in this application further includes the following.
(1) Define a maximum quantity of TAGs that can be reported by the terminal device or a quantity of TAs that can be maintained by the terminal device.
   The TAG or the TA maintains one TAT.
(2) Define a TAT start/restart condition: Each TAG or TA initially obtains or updates a corresponding TAT to start or restart.
(3) Define a UE behavior when the TA expires.

(3.1) If the TAT expires before the handover, the terminal automatically releases the maintained TA.

For example, the TA of the first cell is maintained. After obtaining the TA of the first cell, the terminal device starts or restarts a timer. Then, if the terminal device does not receive a cell handover command before the timer expires, the first TA is released after the timer expires, or the first TA is released after the cell handover command is received. That the timer expires may be understood as that preset duration is exceeded.

For example, after obtaining the TA of the first cell, the terminal device starts or restarts the timer to start timing. If it is assumed that the preset duration is 50 ms, if the terminal device does not receive the cell handover command within 50 ms, the terminal device releases the first TA; or after the timer expires, the first TA is released after the cell handover command is received. Releasing the first TA may be understood as releasing all resources of the first cell.

(3.2) If the TAT expires after the handover and the maintained TA becomes a service area TA, the existing service area TA update mechanism is triggered to update the TA.

(3.3) After the handover, if the maintained TA is still a TA of a non-service area or a TA of a non-candidate cell after the handover, the maintained TA is automatically released.

For example, the TA of the first cell is maintained. After obtaining the TA of the first cell, the terminal device starts or restarts the timer. If the cell handover command is received before the timer expires, but the serving cell after the handover or a second candidate cell set of the terminal device after the handover does not include the first cell, the first TA is released.

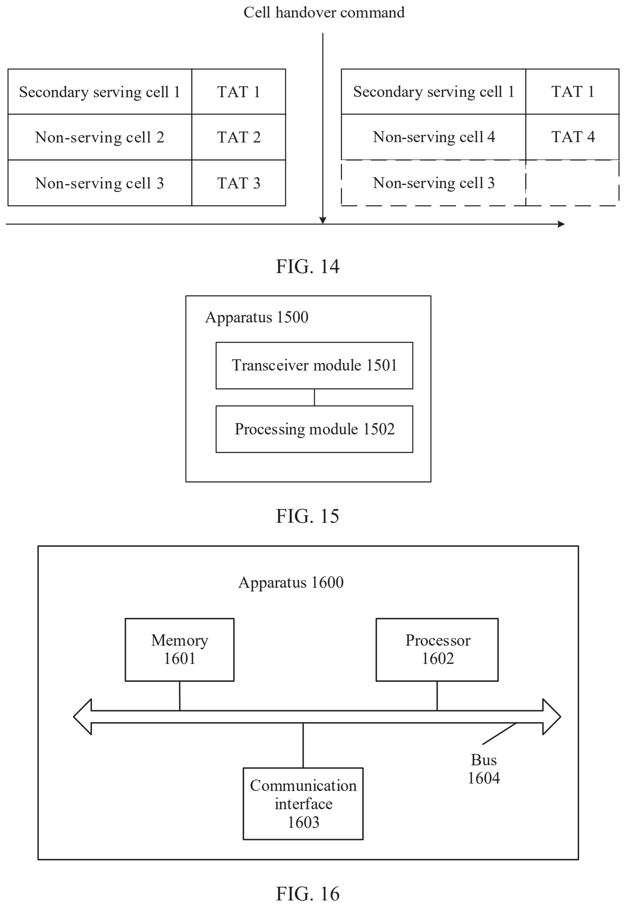

For ease of understanding, FIG. 14 is used as an example for description. As shown in FIG. 14, it is assumed that the candidate cell set (which may be considered as a first cell set) corresponding to the terminal device before the terminal device performs cell handover includes the secondary serving cell 1 (a corresponding maintained timer is a TAT 1), the non-serving cell 2 (a corresponding maintained timer is a TAT 2), and the non-serving cell 3 (a corresponding maintained timer is a TAT 3). After the cell handover command is received, the non-serving cell 2 becomes a service area, and a corresponding candidate cell set (which may be considered as the second candidate cell set) includes the secondary serving cell 1 (the corresponding maintained timer is the TAT 1) and a non-serving cell 4 (a corresponding maintained timer is a TAT 4), that is, the second candidate cell set after the handover does not include the non-serving cell 3 (a dashed line in FIG. 14 indicates that the non-serving cell 3 is no longer included). It may be understood that, in this case, the non-serving cell 3 is neither a serving cell after the handover nor a cell in the second candidate cell set. Therefore, the terminal device may release the TA of the non-serving cell 3, that is, no longer maintain the TA 3.

(4) Define a behavior of the TA maintenance timer TAT before and after the handover.

After the handover, if the maintained TA is in the service area or in a new candidate cell list, the counting continues.

After the handover, if the maintained TA is not in the service area or is not in the new candidate cell list, the counter stops counting and the maintained TA is released.

(5) Define an updated reference for TA during or after the handover.

If a relative value of a base station is updated during or after the handover, the reference value is updated to the maintained TA before the handover.

If an absolute value of the base station is updated during or after the handover, the TA uses the new value.

The foregoing describes in detail the communication methods provided in this application with reference to FIG. 10 to FIG. 14. The following describes in detail communication apparatuses according to embodiments of this application with reference to FIG. 15 and FIG. 16.

FIG. 15 is a diagram of a structure of a communication apparatus according to an embodiment of this application. Specifically, as shown in FIG. 15, the apparatus 1500 includes a transceiver module 1501 and a processing module 1502.

In a first embodiment, the communication apparatus is used in a terminal device.

Specifically, in the first embodiment, the transceiver module 1501 is configured to receive first information, where the first information indicates a manner of obtaining a timing advance TA of a first cell; and the processing module is configured to obtain the TA of the first cell based on the first information.

A specific form of the first cell is not limited in this embodiment.

For example, in a first scenario, the first cell in this embodiment is a candidate cell. It should be noted that the candidate cell in this embodiment refers to any cell other than a primary serving cell, and is also referred to as a neighboring cell, a candidate neighboring cell, a target cell, or a candidate target cell.

It should be understood that a type of the candidate cell may be a secondary serving cell, a non-serving cell (a cell other than the primary serving cell and the secondary serving cell), a cell whose PCI is different from a service area, or the like.

In other words, in the first scenario, a network device in this embodiment sends the first information to the terminal device, where the first information indicates a manner of obtaining a TA of a first candidate cell other than the primary serving cell.

For another example, in a second scenario, the first cell in this embodiment is a primary serving cell.

In other words, in the second scenario, the network device in this embodiment sends the first information to the terminal device, where the first information indicates a manner of obtaining a TA of the primary serving cell.

It can be learned that when the communication apparatus provided in this application is used in the terminal device, when the first cell is the candidate cell, an obtaining manner of obtaining the TA of the first cell is configured for the apparatus based on the first information. Therefore, before receiving a cell handover command, the terminal device may obtain the TA of the first cell in a manner indicated by the first information, to complete uplink synchronization with the first cell. In this way, after the terminal device is handed over to the first cell, the terminal device may no longer perform an uplink synchronization process. Therefore, a handover delay of handover to the first cell can be reduced.

For example, in an implementation solution, after configuring the first information for the terminal device, the network device to which a serving cell currently serving the terminal device belongs may trigger, based on a downlink control channel PDCCH order, the terminal device to send a preamble (Preamble) to the first cell. Then, the first cell determines the TA of the first cell based on the Preamble sent by the terminal device, and sends a TA indication to the terminal device. Correspondingly, the terminal device receives, based on a receiving manner indicated by the first information, the TA indication sent by the first cell. Optionally, after the first cell determines the TA of the first cell based on the Preamble sent by the terminal device, the corresponding TA indication may be further sent to the terminal device via the network device to which the serving cell currently serving the terminal device belongs.

In a possible implementation, the transceiver module 1501 is further configured to receive second information, where the second information indicates a manner of obtaining a TA of a first cell set, and the first cell is included in the first cell set. That the processing module 1502 is further configured to obtain the TA of the first cell based on the first information includes: obtaining the TA of the first cell based on the first information and the second information.

In this implementation, the network device sends the first information and the second information to the apparatus, so that the terminal device determines a receiving manner of receiving the TA indication of the first cell. It may be understood that, in this implementation, flexible scheduling may be performed on a terminal device that supports a random access response (random access response, RAR), a terminal device that does not support the RAR, and a terminal device that supports both the RAR and no RAR (support both obtaining the TA indication through the RAR and obtaining the TA indication in another manner).

In a possible implementation, the first cell is a candidate cell.

In a possible implementation, the manner, indicated by the first information, of obtaining the TA of the first cell is any one of the following manners: receiving the TA indication of the first cell from the random access response RAR; or receiving the TA indication of the first cell from the cell handover command, where the TA indication includes the TA of the first cell; or receiving the TA indication of the first cell from third information, where the third information includes at least one of the following: medium access control-control element MAC-CE signaling and downlink control information DCI signaling.

How the first information specifically indicates is not limited in this embodiment.

For example, in an implementation solution, the first information may directly indicate whether the terminal device receives the TA indication of the first cell through the RAR, or receives the TA indication of the first cell through the cell handover command, or receives the TA indication of the first cell through independent signaling. It may be understood that this manner may also be considered as an explicit indication.

For another example, in another implementation solution, the first information may indicate, to the terminal device, whether an RAR of the first cell is configured. Then, if the RAR of the first cell is configured (which is also referred to as indicating that the RAR of the first cell is enabled), it is considered that the terminal device is indicated to receive the TA indication of the first cell through the RAR. Correspondingly, when the terminal device receives the first information, if the first information indicates, to the terminal device, that the RAR of the first cell is configured, the terminal device receives the TA indication of the first cell through the RAR. Otherwise (to be specific, the RAR of the first cell is not configured, which is also referred to as indicating that the RAR of the first cell is disabled), it is considered that the terminal device is indicated to receive the TA indication of the first cell in another manner. Correspondingly, when the terminal device receives the first information, if the first information indicates, to the terminal device, that the RAR of the first cell is not configured, the terminal device receives the TA indication of the first cell in another manner. For example, the TA indication of the first cell is received through the handover command or the TA indication of the first cell is received through separate signaling.

For another example, in still another implementation solution, the first information may indicate, to the terminal device, whether the RAR of the first cell is configured. Then, if the RAR of the first cell is configured, the first information may further indicate, to the terminal device, that the TA indication is received through the RAR, or the TA indication is received through the handover command, or the TA indication is received through independent signaling, or the TA indication is received in a joint receiving manner.

In a possible implementation, the transceiver module 1501 is further configured to send a preamble to the first cell through a first beam, where the preamble is used by the first cell to determine a TA value of the first cell, and the first beam is any one of the following: an SSB beam associated with an RO, a beam indicated by one of active transmission configuration indicators TCI of the first cell, a beam used by a downlink control channel PDCCH order, and a beam indicated by the PDDCH order.

In other words, in this implementation, when the terminal device sends the preamble, a selected beam is the SSB beam associated with the RO, the beam indicated by one of the active transmission configuration indicators TCI of the first cell, the beam used by the downlink control channel PDCCH order, or the beam indicated by the PDDCH order.

In a possible implementation, the processing module 1502 is further configured to determine transmit power of the preamble based on a path loss reference signal PL-RS, where the PL-RS is any one of the following: an SSB associated with the RO, a reference signal indicated by or associated with an active transmission configuration indicator TCI of the first cell, a reference signal associated with a PDCCH, and a path loss reference signal indicated by the PDCCH order.

In other words, in this implementation, when the terminal device determines the transmit power of the preamble, a selected reference signal is the SSB associated with the RO, the reference signal indicated by or associated with the active transmission configuration indicator TCI of the first cell, the reference signal associated with a PDCCH, or the path loss reference signal indicated by the PDCCH order.

In a possible implementation, when the TA indication of the first cell is received through the RAR, the TA indication includes at least one of the following content: a first identifier, a TA value, and a second identifier. The TA indication includes at least one of the following content: the first identifier, the TA value, and the second identifier. The first identifier indicates whether the TA value carried in the RAR is an absolute value, and the second identifier indicates the first cell or the first cell set.

In a possible implementation, the second identifier is any one of the following types: a lower-layer triggered mobility LTM configuration index corresponding to the first cell, a cell identifier of the first cell, or a timing advance group TAG identifier corresponding to the first cell.

In a possible implementation, the manner, indicated by the first information, of obtaining the TA of the first cell further includes: sending a preamble to the first cell, or sending an uplink reference signal to the first cell, or obtaining the TA through a downlink timing difference.

In a possible implementation, after obtaining the TA of the first cell, the processing module 1502 is further configured to: start or restart a timer. If the cell handover command is not received before the timer expires, a first TA is released after the timer expires, or the first TA is released after the cell handover command is received.

In a possible implementation, after obtaining the TA of the first cell, the processing module 1502 is further configured to start or restart a timer. If a cell handover command is received before the timer expires, but a serving cell after the handover or a second candidate cell set of the terminal device after the handover does not include the first cell, the first TA is released.

In a possible implementation, the transceiver module 1501 is further configured to send fourth information, where the fourth information indicates an RAR support capability of the terminal device.

In a second embodiment, the communication apparatus is used in the network device.

Specifically, in the second embodiment, the transceiver module 1501 is configured to send first information to the terminal apparatus, where the first information indicates a manner of obtaining the timing advance TA of the first cell.

In a possible implementation, the transceiver module 1501 is further configured to send second information to the terminal apparatus, where the second information indicates a manner of obtaining a TA of a first cell set, and the first cell is included in the first cell set.

In a possible implementation, the first cell is a candidate cell.

In a possible implementation, the manner, indicated by the first information, of obtaining the TA of the first cell is any one of the following manners: receiving the TA indication of the first cell from a random access response RAR; or
receiving the TA indication of the first cell from a cell handover command, where the TA indication includes the TA of the first cell; or receiving the TA indication of the first cell from third information, where the third information includes at least one of the following: medium access control-control element MAC-CE signaling and downlink control information DCI signaling.

In a possible implementation, when the manner, indicated by the first information, of obtaining the TA of the first cell is receiving the TA indication of the first cell through the RAR, the TA indication includes at least one of the following content: a first identifier, a TA value, and a second identifier. The first identifier indicates whether the TA value carried in the RAR is an absolute value, and the second identifier indicates the first cell or the first cell set.

In a possible implementation, the second identifier is any one of the following types: a lower-layer triggered mobility LTM configuration index corresponding to the first cell, a cell identifier of the first cell, or a timing advance group TAG identifier corresponding to the first cell.

In a possible implementation, the manner, indicated by the first information, of obtaining the TA of the first cell further includes: sending a preamble to the first cell, or sending an uplink reference signal to the first cell, or obtaining the TA through a downlink timing difference.

In a possible implementation, the transceiver module 1501 is further configured to receive fourth information sent by the terminal apparatus, where the fourth information indicates an RAR support capability of the terminal device. The processing module 1502 is configured to determine the first information and/or the second information based on the fourth information.

FIG. 16 is a diagram of a structure of a communication apparatus according to another embodiment of this application. The apparatus shown in FIG. 16 may be configured to perform the method according to any one of the foregoing embodiments.

As shown in FIG. 16, the apparatus 1600 in this embodiment includes a memory 1601, a processor 1602, a communication interface 1603, and a bus 1604. The memory 1601, the processor 1602, and the communication interface 1603 are communicatively connected to each other through the bus 1604.

The memory 1601 may be a read-only memory (read-only memory, ROM), a static storage device, a dynamic storage device, or a random access memory (random access memory, RAM). The memory 1601 may store a program. When the program stored in the memory 1601 is executed by the processor 1602, the processor 1602 is configured to perform the steps of the methods shown in FIG. 10 to FIG. 14.

The processor 1602 may be a general-purpose central processing unit (central processing unit, CPU), a microprocessor, an application-specific integrated circuit (application specific integrated circuit, ASIC), or one or more integrated circuits, and is configured to execute a related program, to implement the method shown in FIG. 10 or FIG. 14 in this application.

The processor 1602 may alternatively be an integrated circuit chip and has a signal processing capability. In an implementation process, the steps of the methods in FIG. 10 to FIG. 14 in embodiments of this application may be completed by using an integrated logic circuit of hardware in the processor 1602 or instructions in a form of software.

The processor 1602 may alternatively be a general-purpose processor, a digital signal processor (digital signal processor, DSP), an application-specific integrated circuit (ASIC), a field programmable gate array (field programmable gate array, FPGA) or another programmable logical device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like.

Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the field, for example, a random access memory, a flash memory, a read-only memory, a programmable read-only memory, an electrically erasable programmable memory, or a register. The storage medium is located in the memory 1601. The processor 1602 reads information in the memory 1601, and completes, in combination with hardware of the processor 1602, functions that need to be performed by the units included in the apparatus in this application. For example, the processor 1602 may perform the steps/functions in embodiments shown in FIG. 10 to FIG. 14.

The communication interface 1603 may use, but is not limited to, a transceiver apparatus such as a transceiver, to implement communication between the apparatus 1600 and another device or a communication network.

The bus 1604 may include a path for transmitting information between various components (for example, the memory 1601, the processor 1602, and the communication interface 1603) of the apparatus 1600.

It should be understood that, the apparatus 1600 shown in this embodiment of this application may be a terminal device, or may be a chip configured in the terminal device.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a terminal apparatus, and comprising:
receiving first information, wherein the first information indicates a manner of obtaining a timing advance TA of a first cell; and
obtaining the TA of the first cell based on the first information.

2. The method according to claim 1, wherein the method further comprises:
receiving second information, wherein the second information indicates a manner of obtaining a TA of a first cell set, and the first cell is comprised in the first cell set; and
the obtaining the TA of the first cell based on the first information comprises:
obtaining the TA of the first cell based on the first information and the second information.

3. The method according to claim 1 or 2, wherein the first cell is a candidate cell.

4. The method according to claim 3, wherein the manner, indicated by the first information, of obtaining the TA of the first cell is any one of the following manners:
receiving a TA indication of the first cell from a random access response RAR; or
receiving a TA indication of the first cell from a cell handover command, wherein the TA indication comprises the TA of the first cell; or
receiving a TA indication of the first cell from third information, wherein the third information comprises at least one of the following: medium access control-control element MAC-CE signaling and downlink control information DCI signaling.

5. The method according to claim 4, wherein before the obtaining the TA of the first cell based on the first information, the method further comprises:
sending a preamble to the first cell through a first beam, wherein the preamble is used by the first cell to determine a value of the TA of the first cell, and the first beam is any one of the following: an SSB beam associated with a random access occasion RO, a beam indicated by one of active transmission configuration indicators TCI of the first cell, a beam used by a downlink control channel PDCCH order, and a beam of a reference signal indicated by the PDDCH order.

6. The method according to claim 4 or 5, wherein the method further comprises:
determining transmit power of the preamble based on a path loss reference signal PL-RS, wherein the PL-RS is any one of the following: a synchronization signal block SSB associated with the RO, a reference signal indicated by or associated with the active transmission configuration indicator TCI of the first cell, a reference signal associated with a PDCCH, and the reference signal indicated by the PDCCH order.

7. The method according to any one of claims 4 to 6, wherein when the TA indication of the first cell is received through the RAR, the TA indication comprises at least one of the following content: a first identifier, a TA value, and a second identifier; and
the first identifier indicates whether the TA value carried in the RAR is an absolute value, and the second identifier indicates the first cell or the first cell set.

8. The method according to claim 7, wherein the second identifier is of any one of the following types:
a lower-layer triggered mobility LTM configuration index corresponding to the first cell, a cell identifier of the first cell, or a timing advance group TAG identifier corresponding to the first cell.

9. The method according to any one of claims 1 to 8, wherein the manner, indicated by the first information, of obtaining the TA of the first cell further comprises: sending the preamble to the first cell, or sending an uplink reference signal to the first cell, or obtaining the TA through a downlink timing difference.

10. The method according to any one of claims 1 to 9, wherein after the obtaining the TA of the first cell, the method further comprises:
starting or restarting a timer.

11. The method according to claim 10, wherein the method further comprises:
if the cell handover command is not received before the timer expires, releasing the first TA after the timer expires; or
releasing the first TA after receiving the cell handover command; or
if the cell handover command is received before the timer expires, but a serving cell after handover or a second candidate cell set of the terminal apparatus after handover does not comprise the first cell, releasing the first TA.

12. The method according to any one of claims 1 to 11, wherein the method further comprises:
sending fourth information, wherein the fourth information indicates an RAR support capability of the terminal apparatus.

13. A communication method, comprising:
sending first information to a terminal apparatus, wherein the first information indicates a manner of obtaining a timing advance TA of a first cell.

14. The method according to claim 13, wherein the method further comprises:
sending second information to the terminal apparatus, wherein the second information indicates a manner of obtaining a TA of a first cell set, and the first cell is comprised in the first cell set.

15. The method according to claim 13 or 14, wherein the first cell is a candidate cell.

16. The method according to claim 15, wherein the manner , indicated by the first information, of obtaining the TA of the first cell is any one of the following manners:
receiving a TA indication of the first cell from a random access response RAR; or
receiving a TA indication of the first cell from a cell handover command, wherein the TA indication comprises the TA of the first cell; or
receiving a TA indication of the first cell from third information, wherein the third information comprises at least one of the following: medium access control-control element MAC-CE signaling and downlink control information DCI signaling.

17. The method according to claim 16, wherein when the manner, indicated by the first information, of obtaining the TA of the first cell is receiving the TA indication of the first cell through the RAR, and the TA indication comprises at least one of the following content: a first identifier, a TA value, and a second identifier; and
the first identifier indicates whether the TA value carried in the RAR is an absolute value, and the second identifier indicates the first cell or the first cell set.

18. The method according to claim 17, wherein the second identifier is of any one of the following types:
a lower-layer triggered mobility LTM configuration index corresponding to the first cell, a cell identifier of the first cell, or a timing advance group TAG identifier corresponding to the first cell.

19. The method according to any one of claims 13 to 18, wherein the manner, indicated by the first information, of obtaining the TA of the first cell further comprises: sending a preamble to the first cell, or sending an uplink reference signal to the first cell, or obtaining the TA through a downlink timing difference.

20. The method according to any one of claims 13 to 19, wherein the method further comprises:
receiving fourth information sent by the terminal apparatus, wherein the fourth information indicates an RAR support capability of the terminal apparatus; and
determining the first information and/or the second information based on the fourth information.

21. A communication apparatus, wherein the apparatus comprises a module configured to perform the method according to any one of claims 1 to 12.

22. A communication apparatus, wherein the apparatus comprises a module configured to perform the method according to any one of claims 13 to 20.

23. A communication apparatus, comprising a processor, wherein the processor is coupled to a memory;
the memory is configured to store program instructions; and
the processor is configured to invoke the program instructions in the memory to perform the method according to any one of claims 1 to 12 or claims 13 to 20.

24. A chip, comprising at least one processor and a communication interface, wherein the communication interface and the at least one processor are interconnected through a line, and the at least one processor is configured to run a computer program or instructions, to perform the method according to any one of claims 1 to 12 or claims 13 to 20.

25. A computer-readable medium, wherein the computer-readable medium stores program code for computer execution, and the program code comprises instructions for performing the method according to any one of claims 1 to 12 or claims 13 to 20.

26. A computer program product, wherein the computer program product comprises computer program code, and when the computer program code is run on a computer, the computer is enabled to implement the method according to any one of claims 1 to 12 or claims 13 to 20.

27. A communication system, comprising the communication apparatus according to claim 21 and claim 22.

28. A communication method, comprising:
sending a preamble to a first cell, wherein the preamble is used by the first cell to determine a timing advance TA of the first cell; and
receiving a cell handover command, wherein the cell handover command indicates a terminal apparatus to hand over to the first cell, the cell handover command comprises a TA indication of the first cell, and the TA indication comprises the TA of the first cell.

29. The method according to claim 28, wherein the first cell is a candidate cell.

30. The method according to claim 28 or 29, wherein the sending the preamble to the first cell comprises:
sending the preamble to the first cell through a first beam, wherein the first beam is any one of the following: an SSB beam associated with a random access occasion RO, a beam indicated by one of active transmission configuration indicators TCI of the first cell, a beam used by a downlink control channel PDCCH order, and a beam of a reference signal indicated by the PDDCH order.

31. The method according to any one of claims 28 to 30, wherein the method further comprises:
determining transmit power of the preamble based on a path loss reference signal PL-RS, wherein the PL-RS is any one of the following: a synchronization signal block SSB associated with the RO, a reference signal indicated by or associated with the active transmission configuration indicator TCI of the first cell, a reference signal associated with a PDCCH, and the reference signal indicated by the PDCCH order.

32. The method according to any one of claims 28 to 31, wherein after receiving the TA indication of the first cell from the cell handover command, the method further comprises:
starting or restarting a timer.

33. The method according to claim 32, wherein the method further comprises:
if the cell handover command is not received before the timer expires, releasing the TA of the first cell after the timer expires; or
after receiving the cell handover command, releasing the TA of the first cell; or
if the cell handover command is received before the timer expires, but a serving cell after handover or a second candidate cell set of the terminal apparatus after handover does not comprise the first cell, releasing the TA of the first cell.

34. The method according to any one of claims 28 to 33, wherein the method further comprises:
sending fourth information, wherein the fourth information indicates a random access response RAR support capability of the terminal apparatus.

35. A communication method, comprising:
receiving a preamble sent by a terminal apparatus to a first cell, wherein the first cell is a candidate cell of the terminal apparatus; and
determining a TA of the first cell based on the preamble.

36. A communication method, comprising:
sending a cell handover command, wherein the cell handover command indicates a terminal apparatus to hand over to a first cell, the cell handover command comprises a TA indication of the first cell, the TA indication comprises a TA of the first cell, and the first cell is a candidate cell of the terminal apparatus.

37. A communication apparatus, wherein the apparatus comprises a module configured to perform the method according to any one of claims 28 to 34, a module configured to perform the method according to claim 35, or a module configured to perform the method according to claim 36.
